# EUROPEAN PATENT APPLICATION

(11) **EP 4 693 990 A1**
(43) Date of publication of application: **11.02.2026**
(21) Application number: 23931453.7
(22) Date of filing: 06.04.2023
(51) Int. Cl.: H04L 5/00, H04W 72/23

(54) **CONFIGURATION METHOD AND APPARATUS FOR REFERENCE CONFIGURATION INFORMATION**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Gunzelmann, Rainer
(86) International application number: PCT/CN2023/086743
(87) International publication number: WO 2024/207385

(57) **Abstract**

Embodiments of the present application disclose a configuration method and apparatus for reference configuration information, which can be applied to the technical field of communications. The method comprises: a terminal can receive a first message of a network device, wherein the first message carries reference configuration information, and the reference configuration information is used for a candidate configuration of a specified mobility operation, so that a configuration of reference configuration information of a candidate configuration of at least one specified mobility operation is realized, complete candidate configuration information of the at least one specified mobility operation is conveniently generated and is used for mobility operation processing, the configuration efficiency of the reference configuration information is improved, and the mobility operation efficiency is improved.

## Description

### FIELD

The present disclosure relates to the field of communication technologies, and in particular, to a method and apparatus for configuring reference configuration information.

### BACKGROUND

In the mobility enhancement topic of R18, it is clarified that the candidate configurations for Layer 1/Layer 2-triggered mobility (LTM) and selective activation of cell groups are both incremental configurations, which are incremental information on a specific reference configuration. The reference configuration is a separate reference configuration, and the terminal manages the reference configuration separately. Taking LTM as an example, after the terminal receives an LTM message carrying a candidate configuration, it generates complete candidate configuration information based on the reference configuration for LTM and the candidate configuration; when the terminal performs cell handover, it can apply the complete candidate configuration information for cell handover processing.

Currently, in the mobility enhancement topic of R18, only how to apply the reference configuration is discussed, but how to configure the reference configuration is not involved.

### SUMMARY

Embodiments of present disclosure provide a method and apparatus for configuring reference configuration information, which can be applied to communication technology networks to achieve configuration processing of reference configuration information and improve the configuration efficiency of reference configuration information.

In a first aspect, an embodiment of present disclosure provides a method for configuring reference configuration information, performed by a terminal, where the method includes: receiving a first message, where the first message carries reference configuration information; where the reference configuration information is used for a candidate configuration of a specified mobility operation.

In an embodiment, the first message further includes at least one of: a candidate configuration used to configure the specified mobility operation; or a candidate configuration used to configure a mobility operation other than the specified mobility operation, where the mobility operation other than the specified mobility operation includes at least one of: conditional handover (CHO), conditional primary secondary cell addition (CPA), conditional primary secondary cell change (CPC).

In an embodiment, the specified mobility operation includes one or more of the following: Layer 1/Layer 2-triggered mobility (LTM), selective activation of cell groups, or a mobility operation, other than LTM and selective activation of cell groups, pre-configured with a candidate configuration.

In an embodiment, the reference configuration information is configured with a first parameter of a setup/release type.

In an embodiment, the first message carries the first parameter, and the method further includes: in response to the first parameter being set to a first state, performing configuration processing or reconfiguration processing on the reference configuration information; or in response to the first parameter being set to a second state, performing release processing or deletion processing on the stored reference configuration information.

In an embodiment, the method further includes: storing the reference configuration information used for the candidate configuration of the specified mobility operation.

In an embodiment, the method further includes: in response to receiving a second message not carrying reference configuration information, retaining the stored reference configuration information; and/or in response to receiving a third message carrying new reference configuration information, updating the stored reference configuration information according to the new reference configuration information.

In an embodiment, a presence state of the reference configuration information for the candidate configuration of the specified mobility operation in the first message includes any one of: conditionally present, optionally present, or mandatorily present.

In an embodiment, in response to the reference configuration information for the candidate configuration of the specified mobility operation being conditionally presented in the first message, a presence condition of the reference configuration information is one or more of: the reference configuration information is not stored in the terminal, or the reference configuration information is not configured.

In an embodiment, when the reference configuration information is not stored in the terminal or the reference configuration information is not configured, the reference configuration information is mandatorily presented in the first message; and/or where the reference configuration information is stored in the terminal or the reference configuration information is configured in the terminal, the reference configuration information is optionally presented in the first message.

In an embodiment, in response to the reference configuration information for the candidate configuration of the specified mobility operation being conditionally presented in the first message, the presence condition of the reference configuration information is that the terminal is configured with the specified mobility operation.

In an embodiment, when the terminal is configured with the specified mobility operation, the reference configuration information is optionally presented in the first message; and/or where the terminal is not configured with the specified mobility operation, the reference configuration information is not present in the first message.

In an embodiment, in response to the reference configuration information for the candidate configuration of the specified mobility operation being conditionally presented in the first message, the presence condition of the reference configuration information is one or more of: candidate configuration information corresponding to a mobility operation for which the reference configuration information is used is already stored in the terminal, or candidate configuration information corresponding to a mobility operation for which the reference configuration information is used is configured.

In an embodiment, when the presence condition is met, the reference configuration information is optionally presented in the first message; and/or where the presence condition is not met, the reference configuration information is not present in the first message.

In an embodiment, the terminal being configured with the specified mobility operation includes: the terminal being configured with a candidate configuration for the specified mobility operation; or the terminal being configured with a candidate configuration associated with first indication information, where the first indication information is used for the specified mobility operation.

In an embodiment, the reference configuration information is carried in an information element used for the specified mobility operation in the first message.

In an embodiment, the reference configuration information is carried in any one of the following information elements in the first message: an information element used for the specified mobility operation, an information element used for a mobility operation other than the specified mobility operation; where the mobility operation other than the specified mobility operation includes at least one of: CHO, CPA, or CPC.

In an embodiment, the reference configuration information includes or is associated with at least one piece of second indication information, and the second indication information is used to indicate the specified mobility operation for which the reference configuration information is used.

In an embodiment, the second indication information includes: an identifier of at least one candidate configuration of the specified mobility operation for which the reference configuration information is used.

In an embodiment, a quantity of the reference configuration information is at least one, and each piece of the reference configuration information is associated with at least one type of specified mobility operation; each type of specified mobility operation is associated with one piece of reference configuration information.

In an embodiment, each piece of the reference configuration information is associated with an identifier of at least one candidate configuration of the specified mobility operation; each identifier of the candidate configuration is associated with one piece of the reference configuration information.

In an embodiment, in response to the candidate configuration for the specified mobility operation being conditionally present, a presence condition of candidate configuration information corresponding to the specified mobility operation is one or more of: the reference configuration information is already stored in the terminal, or the reference configuration information is configured.

In an embodiment, when the presence condition is met, the candidate configuration information is optionally presented in the first message; and/or where the presence condition is not met, the candidate configuration information is not present in the first message.

In this technical solution, the terminal can receive a first message from a network device, where the first message carries reference configuration information; the reference configuration information is used for a candidate configuration of a specified mobility operation, thereby achieving configuration of reference configuration information for the candidate configuration of at least one specified mobility operation, facilitating generation of complete candidate configuration information for at least one specified mobility operation for mobility operation processing, improving the configuration efficiency of reference configuration information, and improving mobility operation efficiency.

In a second aspect, an embodiment of present disclosure provides another method for configuring reference configuration information, performed by a network device, where the method includes: sending a first message, where the first message carries reference configuration information; where the reference configuration information is used for a candidate configuration of a specified mobility operation.

In an embodiment, the first message further includes at least one of: a candidate configuration used to configure the specified mobility operation; or a candidate configuration used to configure a mobility operation other than the specified mobility operation, where the mobility operation other than the specified mobility operation includes at least one of: conditional handover (CHO), conditional primary secondary cell addition (CPA), conditional primary secondary cell change (CPC).

In an embodiment, the specified mobility operation includes one or more of the following: Layer 1/Layer 2-triggered mobility (LTM), selective activation of cell groups, or a mobility operation, other than LTM and selective activation of cell groups, pre-configured with a candidate configuration.

In an embodiment, the reference configuration information is configured with a first parameter of a setup/release type.

In an embodiment, the first message carries the first parameter; where when the first parameter is set to a first state, it is used to instruct the terminal to perform configuration processing or reconfiguration processing on the reference configuration information; when the first parameter is set to a second state, it is used to instruct the terminal to perform release processing or deletion processing on the stored reference configuration information.

In an embodiment, a presence state of the reference configuration information for the candidate configuration of the specified mobility operation in the first message includes any one of: conditionally present, optionally present, or mandatorily present.

In an embodiment, the reference configuration information for the candidate configuration of the specified mobility operation is conditionally presented in the first message, and a presence condition of the reference configuration information is one or more of: the reference configuration information is not stored in the terminal, or the reference configuration information is not configured.

In an embodiment, when the reference configuration information is not stored in the terminal or the reference configuration information is not configured, the reference configuration information is mandatorily presented in the first message; and/or where the reference configuration information is stored in the terminal or the reference configuration information is configured in the terminal, the reference configuration information is optionally presented in the first message.

In an embodiment, the reference configuration information for the candidate configuration of the specified mobility operation is conditionally presented in the first message, and a presence condition of the reference configuration information is that the terminal is configured with the specified mobility operation.

In an embodiment, when the terminal is configured with the specified mobility operation, the reference configuration information is optionally presented in the first message; and/or where the terminal is not configured with the specified mobility operation, the reference configuration information is not present in the first message.

In an embodiment, the reference configuration information for the candidate configuration of the specified mobility operation is conditionally presented in the first message, and a presence condition of the reference configuration information is one or more of: candidate configuration information corresponding to a mobility operation for which the reference configuration information is used is already stored in the terminal, or candidate configuration information corresponding to a mobility operation for which the reference configuration information is used is configured.

In an embodiment, when the presence condition is met, the reference configuration information is optionally presented in the first message; and/or where the presence condition is not met, the reference configuration information is not present in the first message.

In an embodiment, the terminal being configured with the specified mobility operation includes: the terminal being configured with a candidate configuration for the specified mobility operation; or the terminal being configured with a candidate configuration associated with first indication information, where the first indication information is used for the specified mobility operation.

In an embodiment, the reference configuration information is carried in an information element used for the specified mobility operation in the first message.

In an embodiment, the reference configuration information is carried in any one of the following information elements in the first message: an information element used for the specified mobility operation, an information element used for a mobility operation other than the specified mobility operation; where the mobility operation other than the specified mobility operation includes at least one of: CHO, CPA, or CPC.

In an embodiment, the reference configuration information includes or is associated with at least one piece of second indication information, and the second indication information is used to indicate the specified mobility operation for which the reference configuration information is used.

In an embodiment, the second indication information includes: an identifier of at least one candidate configuration of the specified mobility operation for which the reference configuration information is used.

In an embodiment, a quantity of the reference configuration information is at least one, and each piece of the reference configuration information is associated with at least one type of specified mobility operation; each type of specified mobility operation is associated with one piece of reference configuration information.

In an embodiment, each piece of the reference configuration information is associated with an identifier of at least one candidate configuration of the specified mobility operation; each identifier of the candidate configuration is associated with one piece of the reference configuration information.

In an embodiment, the candidate configuration for the specified mobility operation is conditionally present, and a presence condition of candidate configuration information corresponding to the specified mobility operation is one or more of: the reference configuration information is already stored in the terminal, or the reference configuration information is configured.

In an embodiment, when the presence condition is met, the candidate configuration information is optionally presented in the first message; and/or where the presence condition is not met, the candidate configuration information is not present in the first message.

In this technical solution, the network device can send a first message to the terminal, where the first message carries reference configuration information; the reference configuration information is used for a candidate configuration of a specified mobility operation, thereby achieving configuration of reference configuration information for the candidate configuration of at least one specified mobility operation, facilitating generation of complete candidate configuration information for at least one specified mobility operation for mobility operation processing, improving the configuration efficiency of reference configuration information, and improving mobility operation efficiency.

In a third aspect, an embodiment of present disclosure provides a communication apparatus, where the communication apparatus has some or all functions of the terminal in the method described in the first aspect. For example, the functions of the communication apparatus may include some or all functions in the embodiments of present disclosure, or may include the function of any single embodiment in present disclosure. The functions may be implemented by hardware, or by hardware executing corresponding software. The hardware or software includes one or more units or modules corresponding to the above functions.

In an embodiment, the structure of the communication apparatus may include a transceiver unit and a processing unit, where the processing unit is configured to support the communication apparatus to perform corresponding functions in the above method. The transceiver unit is configured to support communication between the communication apparatus and other devices. The communication apparatus may further include a storage unit, where the storage unit is coupled to the transceiver unit and the processing unit, and stores necessary computer programs and data for the communication apparatus.

As an example, the processing unit may be a processor, the transceiver unit may be a transceiver or a communication interface, and the storage unit may be a memory.

In a fourth aspect, an embodiment of present disclosure provides another communication apparatus, where the communication apparatus has some or all functions of the network device in the method example described in the second aspect. For example, the functions of the communication apparatus may include some or all functions in the embodiments of present disclosure, or may include the function of any single embodiment in present disclosure. The functions may be implemented by hardware, or by hardware executing corresponding software. The hardware or software includes one or more units or modules corresponding to the above functions.

In an embodiment, the structure of the communication apparatus may include a transceiver unit and a processing unit, where the processing unit is configured to support the communication apparatus to perform corresponding functions in the above method. The transceiver unit is configured to support communication between the communication apparatus and other devices. The communication apparatus may further include a storage unit, where the storage unit is coupled to the transceiver unit and the processing unit, and stores necessary computer programs and data for the communication apparatus.

As an example, the processing unit may be a processor, the transceiver unit may be a transceiver or a communication interface, and the storage unit may be a memory.

In a fifth aspect, an embodiment of present disclosure provides a communication apparatus, including a processor, where when the processor invokes a computer program in a memory, the method described in the first aspect is executed.

In a sixth aspect, an embodiment of present disclosure provides a communication apparatus, including a processor, where when the processor invokes a computer program in a memory, the method described in the second aspect is executed.

In a seventh aspect, an embodiment of present disclosure provides a communication apparatus, including a processor and a memory, where a computer program is stored in the memory; the processor executes the computer program stored in the memory to cause the communication apparatus to perform the method described in the first aspect.

In an eighth aspect, an embodiment of present disclosure provides a communication apparatus, including a processor and a memory, where a computer program is stored in the memory; the processor executes the computer program stored in the memory to cause the communication apparatus to perform the method described in the second aspect.

In a ninth aspect, an embodiment of present disclosure provides a communication apparatus, including a processor and an interface circuit, where the interface circuit is configured to receive code instructions and transmit the code instructions to the processor; the processor is configured to run the code instructions to cause the apparatus to perform the method described in the first aspect.

In a tenth aspect, an embodiment of present disclosure provides a communication apparatus, including a processor and an interface circuit, where the interface circuit is configured to receive code instructions and transmit the code instructions to the processor; the processor is configured to run the code instructions to cause the apparatus to perform the method described in the second aspect.

In an eleventh aspect, an embodiment of present disclosure provides a communication system, including the communication apparatus according to the third aspect and the communication apparatus according to the fourth aspect; or the system includes the communication apparatus according to the fifth aspect and the communication apparatus according to the sixth aspect; or the system includes the communication apparatus according to the seventh aspect and the communication apparatus according to the eighth aspect; or the system includes the communication apparatus according to the ninth aspect and the communication apparatus according to the tenth aspect.

In a twelfth aspect, an embodiment of present disclosure provides a computer-readable storage medium, storing instructions that, when executed, cause the terminal to perform the method described in the first aspect.

In a thirteenth aspect, an embodiment of present disclosure provides a computer-readable storage medium, storing instructions that, when executed, cause the network device to perform the method described in the second aspect.

In a fourteenth aspect, present disclosure further provides a computer program product including a computer program, where when the computer program is run on a computer, the computer is caused to perform the method described in the first aspect.

In a fifteenth aspect, present disclosure further provides a computer program product including a computer program, where when the computer program is run on a computer, the computer is caused to perform the method described in the second aspect.

In a sixteenth aspect, present disclosure provides a chip system, including at least one processor and an interface, configured to support a terminal to implement functions involved in the first aspect, for example, to determine or process at least one of data and information involved in the above method. In a possible design, the chip system further includes a memory, where the memory is configured to store necessary computer programs and data for the terminal. The chip system may be composed of a chip, or may include a chip and other discrete devices.

In a seventeenth aspect, present disclosure provides a chip system, including at least one processor and an interface, configured to support a network device to implement functions involved in the second aspect, for example, to determine or process at least one of data and information involved in the above method. In a possible design, the chip system further includes a memory, where the memory is configured to store necessary computer programs and data for the network device. The chip system may be composed of a chip, or may include a chip and other discrete devices.

In an eighteenth aspect, present disclosure provides a computer program, where when the computer program is run on a computer, the computer is caused to perform the method described in the first aspect.

In a nineteenth aspect, present disclosure provides a computer program, where when the computer program is run on a computer, the computer is caused to perform the method described in the second aspect.

### BRIEF DESCRIPTION OF THE DRAWINGS

In order to more clearly illustrate the technical solutions in the embodiments of present disclosure or the background art, the following will briefly describe the drawings required for the embodiments of present disclosure or the background art.
FIG. 1 is a schematic architectural diagram of a communication system provided by an embodiment of present disclosure;
FIG. 2 is a schematic flowchart of a method for configuring reference configuration information provided by an embodiment of present disclosure;
FIG. 3 is a schematic flowchart of another method for configuring reference configuration information provided by an embodiment of present disclosure;
FIG. 4 is a schematic flowchart of another method for configuring reference configuration information provided by an embodiment of present disclosure;
FIG. 5 is a schematic flowchart of another method for configuring reference configuration information provided by an embodiment of present disclosure;
FIG. 6 is a schematic flowchart of another method for configuring reference configuration information provided by an embodiment of present disclosure;
FIG. 7 is a schematic flowchart of another method for configuring reference configuration information provided by an embodiment of present disclosure;
FIG. 8 is a schematic flowchart of another method for configuring reference configuration information provided by an embodiment of present disclosure;
FIG. 9 is a schematic flowchart of another method for configuring reference configuration information provided by an embodiment of present disclosure;
FIG. 10 is a schematic flowchart of another method for configuring reference configuration information provided by an embodiment of present disclosure;
FIG. 11 is a schematic structural diagram of a communication apparatus provided by an embodiment of present disclosure;
FIG. 12 is a schematic structural diagram of another communication apparatus provided by an embodiment of present disclosure;
FIG. 13 is a schematic structural diagram of another communication apparatus provided by an embodiment of present disclosure; and
FIG. 14 is a schematic structural diagram of a chip provided by an embodiment of present disclosure.

### DETAILED DESCRIPTION

For ease of understanding, the terms involved in present disclosure are first introduced.

### 1. MR-DC

In MR-DC (Multi-Radio Dual Connectivity), a terminal can utilize radio resources provided by two different schedulers, which are located on two different NG-RAN (5G Radio Access Network) nodes, connected via a non-ideal backhaul, one providing NR access and the other providing E-UTRA or NR access. One acts as the MN (Master Node) and the other as the SN (Secondary Node). The MN and SN are connected via a network interface, where at least the MN is connected to the core network.

### 2. MR-DC with EPC

E-UTRAN (Evolved UMTS Terrestrial Radio Access Network) supports MR-DC through E-UTRA-NR DC (EN-DC), where the terminal is connected to an eNB acting as the MN and an en-gNB acting as the SN. The eNB is connected to the EPC (4G core network) via the S1 interface and to the en-gNB via the X2 interface. The en-gNB may also be connected to the EPC via the S1-U interface and to other en-gNBs via the X2-U interface.

### 3. E-UTRA-NR Dual Connectivity NGEN-DC

NG-RAN supports NG-RAN E-UTRA-NR Dual Connectivity (NGEN-DC), where the terminal is connected to an ng-eNB as the MN and a gNB as the SN. The ng-eNB is connected to the 5GC (5G core network), and the gNB is connected to the ng-eNB via the Xn interface.

### 4. NR-E-UTRA Dual Connectivity NE-DC

NG-RAN supports NR-E-UTRA DC (NE-DC), where the terminal is connected to a gNB acting as the MN and an ng-eNB acting as the SN. The gNB is connected to the 5GC, and the ng-eNB is connected to the gNB via the Xn interface.

### 5. NR-NR Dual Connectivity

NG-RAN supports NR-NR DC (NR-DC), where the terminal is connected to a gNB acting as the MN and another gNB acting as the SN. The master gNB is connected to the 5GC via the NG interface, and the two gNBs are connected via the Xn interface; the secondary gNB may also be connected to the 5GC via the NG-U interface. Furthermore, NR-DC can also be used for a terminal accessing a single gNB, which acts as both the MN and the SN, while configuring both a Master Cell Group (MCG) and a Secondary Cell Group (SCG).

In dual connectivity, the terminal can access two cell groups, namely the MCG and the SCG. Under the MCG, there may be many cells, one of which is the cell used for initial access, called the PCell (Primary Cell). As the name implies, the PCell is the most "primary" cell in the MCG. The PCell under the MCG and the SCell (Secondary Cell) under the MCG are combined through Carrier Aggregation (CA). The primary cell in the MCG is the PCell, and the secondary cells are SCells; the primary secondary cell in the SCG is the PSCell (Primary Secondary Cell), and the secondary cells are SCells. Since many signals are only sent on the PCell and PSCell, for convenience of description, the protocol also defines a concept sPCell (special Cell), where the PCell and PSCell are collectively referred to as sPCell.

### 6. Condition-based Mobility Management CHO

Condition-based mobility management CHO (Conditional Handover) refers to a handover performed by the terminal when one or more handover execution conditions are met. The terminal starts evaluating the execution conditions after receiving the CHO configuration and stops evaluating the execution conditions after performing the handover (including legacy handover and CHO). CHO applies to the following criteria: (1) CHO configuration includes CHO candidate cell configuration and execution conditions; (2) an execution condition may include one or two trigger conditions (CHO event A3/A5).

CHO event A3 is that the candidate cell for conditional reconfiguration is better than the PCell/PSCell by an offset. CHO event A5 is that the PCell/PSCell is worse than an absolute threshold 1, and the candidate cell for conditional reconfiguration is better than an absolute threshold 2.

before any execution condition in the CHO configuration is met, if the terminal receives an HO command, it performs the normal handover procedure, regardless of any previously received CHO configuration. During conditional handover execution, i.e., from when the terminal starts synchronizing with the target cell, the terminal does not monitor the source cell.

### 7. Selective Activation of Cell Groups

In Rel-16 Conditional Handover (CHO), and in Rel-17 Conditional PSCell Change (CPC)/Conditional PSCell Addition (CPA), when the terminal configured with CHO/CPC/CPA completes random access to the target PCell/PSCell, it must release the CHO/CPC/CPA configuration. Therefore, if the network device does not reconfigure and reinitialize CHO/CPC/CPA, the terminal has no opportunity to subsequently continue performing CHO/CPC/CPA. This will increase the delay of handover or SCG change and increase signaling overhead, especially in FR2 scenarios where cell group (CG) changes are frequent.

Therefore, the R18 mobility enhancement topic proposal introduced selective activation of cell groups in MR-DC, which allows subsequent configurations to still be executed after a CG change, without the network device needing to reconfigure or reinitialize the corresponding selective activation of cell groups configuration. This can reduce signaling overhead and the interruption duration of cell group change (CG change). The selective activation of cell groups configuration may include at least one of the following: a configuration ID, an activation condition (possibly), and the configuration of the cell group/cell to be activated.

Selective activation of cell groups allows subsequent configurations to still be executed after a cell group change, without the network device needing to reconfigure or reinitialize the corresponding selective activation of cell groups configuration. Therefore, in selective activation of cell groups, the network device can provide the terminal with a "cell group to be activated". Subsequently, the "cell group to be activated" can be activated or deactivated without having to provide the cell group configuration again.

In selective activation of cell groups, the network device can provide the terminal with pre-configured candidate target cell groups or target cells. Subsequently, the terminal can activate or deactivate the pre-configured candidate cells and/or cell groups based on configuration sent by the network device (e.g., an activation message) or corresponding activation events, without needing to provide the cell group configuration again. Alternatively, in selective activation of cell groups, after activating a new cell or cell group, or applying a new cell configuration or cell group configuration, or accessing a new cell or cell group, the terminal does not delete the corresponding selective activation of cell groups configuration information.

Selective activation of cell groups may also be referred to as cell group activation. Cell group activation allows the corresponding configuration information to still be executed after a cell and/or cell group change, without the network device needing to reconfigure or reinitialize the corresponding cell group activation configuration information. Therefore, selective activation of cell groups can reduce signaling overhead and the interruption duration of cell group change. The configuration information for cell group activation may include: a configuration ID and the configuration of the target cell or target cell group. Optionally, the configuration information for cell group activation may also include a trigger condition (or referred to as an execution condition, activation condition).

In related art, selective activation of cell groups is a mobility management process, including any process where, by configuring cell group activation configuration, the terminal activates or deactivates the corresponding cell or cell group, or applies the corresponding cell configuration or cell group configuration, or accesses the cell or cell group, based on signaling sent by the network device, criteria specified by the protocol, or autonomously by the terminal.

In related art, selective activation of cell groups is a mobility management process, including any process where, after performing the mobility process, the terminal does not delete or release the corresponding part or all of the configuration information. Not deleting or releasing the corresponding part or all of the configuration information may also be referred to as retaining the corresponding part or all of the configuration information.

### 8. LTM (L1/L2-triggered mobility)

In 5G systems, the network device can provide the terminal with multiple "candidate cells (or cell groups)". Subsequently, the network device can control the terminal to change among the multiple "candidate cells (or cell groups)" through L1 signaling or L2 signaling. L1 signaling is, for example, DCI (Downlink Control Information). L2 signaling is, for example, MAC CE (Control Element). Controlling the terminal to change among the multiple "candidate cells (or cell groups)" includes, for example, controlling the terminal to change the serving cell (or cell group) from "candidate cell (or cell group)-1" to "candidate cell (or cell group)-2".

One serving cell (or cell group) may correspond to one or more "candidate cells (or cell groups)".

The scenarios supported by L1/L2 mobility in Rel-18 may include non-CA (PCell only) scenarios and CA scenarios (PCell and SCells). This includes the following cases: a) The target PCell/target SCell is not the current serving cell; b) The target PCell is the current SCell; c) The target SCell is the current PCell.

where L1/L2-based mobility supports the following scenarios: a) PCell change with no SCell change; b) PCell change with SCell change; c) At least for PSCell change involving only the SN without MN involvement, NR-DC scenarios are supported in L1/L2-based mobility.

### 9. Reference Configuration

In the R18 mobility enhancement topic, it is clarified that the candidate configurations for LTM and selective activation of cell groups are both incremental configurations, which are incremental information on a specific reference configuration. The reference configuration is a separate reference configuration, and the terminal manages the reference configuration separately.

Currently, 3GPP is also discussing how to apply the candidate configuration and the reference configuration, i.e., when the terminal receives a configuration message for a mobility operation (at least before triggering the mobility operation), the terminal should apply the candidate configuration on top of the reference configuration to generate complete candidate configuration information. When the terminal performs cell handover or cell change (e.g., cell switch), the terminal applies the generated complete candidate configuration information to replace the current serving cell configuration information of the terminal.

It should be noted that, in present disclosure, the method for configuring reference configuration information provided in any embodiment may be performed alone, or in combination with possible implementation methods in other embodiments, or in combination with any technical solution in the related art.

To better understand the method for configuring reference configuration information disclosed in the embodiments of present disclosure, the communication system applicable to the embodiments of present disclosure is first described below.

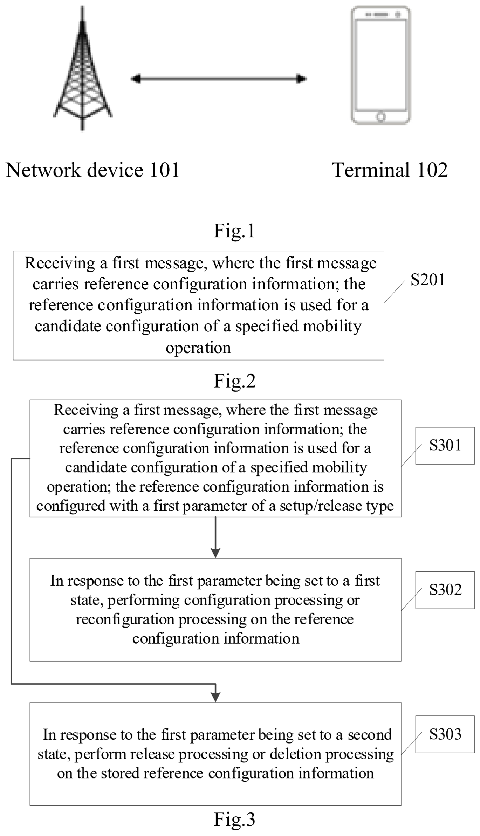

Please refer to FIG. 1. FIG. 1 is a schematic architectural diagram of a communication system provided by an embodiment of present disclosure. The communication system may include, but is not limited to, one network device and one terminal. The number and form of devices shown in FIG. 1 are for illustration only and do not limit the embodiments of present disclosure. In practical applications, there may be two or more network devices and two or more terminals. The communication system shown in FIG. 1 includes one network device 101 and one terminal 102 as an example.

It should be noted that the technical solutions of the embodiments of present disclosure can be applied to various communication systems. For example: Long Term Evolution (LTE) systems, fifth-generation (5G) mobile communication systems, 5G New Radio (NR) systems, or other future new mobile communication systems.

The network device 101 in the embodiments of present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of present disclosure do not limit the specific technology and specific device form adopted by the network device. The network device provided in the embodiments of present disclosure may be composed of a central unit (CU) and a distributed unit (DU), where the CU may also be called a control unit. The CU-DU structure can split the protocol layers of the network device, such as a base station, where the functions of some protocol layers are placed in the CU for centralized control, and the functions of the remaining part or all of the protocol layers are distributed in the DU, which is centrally controlled by the CU.

The terminal 102 in the embodiments of present disclosure is an entity on the user side for receiving or transmitting signals, such as a mobile phone. The terminal may also be called a terminal, user equipment (UE), mobile station (MS), mobile terminal (MT), etc. The terminal may be a car with communication capabilities, a smart car, a mobile phone, a wearable device, a tablet computer (Pad), a computer with wireless transceiver capabilities, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of present disclosure do not limit the specific technology and specific device form adopted by the terminal.

Currently, in the R18 mobility enhancement topic, only how to apply the reference configuration is discussed, but how to configure the reference configuration is not discussed. For LTM, the corresponding reference configuration can be included in the LTM configuration. But for selective activation of cell groups, the configuration for selective activation of cell groups will follow the original CPA/CPC configuration. For CHO/CPA/CPC introduced in R16/R17, a reference configuration is not needed. Therefore, for selective activation of cell groups, how to specifically configure the reference configuration is worth discussing.

Since the candidate configurations for both LTM and selective activation of cell groups are currently RRCReconfiguration, their corresponding reference configurations are also RRCReconfiguration. It may be considered that the reference configurations for LTM and selective activation of cell groups need to be studied collaboratively.

It is understandable that the communication system described in the embodiments of present disclosure is to more clearly illustrate the technical solutions of the embodiments of present disclosure and does not constitute a limitation on the technical solutions provided by the embodiments of present disclosure. Those of ordinary skill in the art will know that as the system architecture evolves and new business scenarios emerge, the technical solutions provided by the embodiments of present disclosure are equally applicable to similar technical problems.

The following describes the method and apparatus for configuring reference configuration information provided in present disclosure in detail with reference to the drawings.

Please refer to FIG. 2. FIG. 2 is a schematic flowchart of a method for configuring reference configuration information provided by an embodiment of present disclosure. The method may be performed by the terminal in FIG. 1. As shown in FIG. 2, the method may include, but is not limited to, the following steps:

Step S201: Receive a first message, where the first message carries reference configuration information; the reference configuration information is used for a candidate configuration of a specified mobility operation.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

In this embodiment of present disclosure, the quantity of reference configuration information is one or more. In one example, one piece of reference configuration information is used for the candidate configuration of one specified mobility operation. Correspondingly, one or more fields may be set in the first message, each field for placing the reference configuration information used for the candidate configuration of one specified mobility operation.

Taking the specified mobility operation including LTM and selective activation of cell groups as an example, the first message may include two fields: one field for placing the reference configuration information used for the candidate configuration of LTM; and another field for placing the reference configuration information used for the candidate configuration of selective activation of cell groups.

Exemplarily, if one mobility operation corresponds to one piece of reference configuration information, then the reference configuration information is applicable to all candidate configurations of this mobility operation, that is, this reference configuration information is a universal reference configuration information for this mobility operation.

**In** this example, for selective activation of cell groups, the quantity of candidate configurations for selective activation of cell groups may be multiple, and the multiple candidate configurations may use the reference configuration information used for the candidate configuration of selective activation of cell groups. For example, for each candidate configuration of selective activation of cell groups, the terminal may combine the candidate configuration and the reference configuration information corresponding to the candidate configuration to generate complete candidate configuration information for the mobility operation.

**In this** example, for LTM, the quantity of candidate configurations for LTM may be multiple, and the multiple candidate configurations may use the reference configuration information used for the candidate configuration of LTM. For example, for each candidate configuration of LTM, the terminal may combine the candidate configuration and the reference configuration information corresponding to the candidate configuration to generate complete candidate configuration information for the mobility operation.

In this embodiment of present disclosure, in another example, one piece of reference configuration information may be used for the candidate configuration of one or more specified mobility operations. In this example, the first message sets a correspondence between the reference configuration information and the specified mobility operation, or the first message sets a correspondence between the reference configuration information and the candidate configuration of the specified mobility operation.

In this example, in one case, the reference configuration information may include or be associated with at least one piece of second indication information, and the second indication information is used to indicate the specified mobility operation for which the reference configuration information is used. The reference configuration information may include at least one piece of second indication information; or the reference configuration information may be associated with at least one piece of second indication information. For example, the quantity of reference configuration information may be two: one piece of reference configuration information includes one piece of second indication information, indicating that the reference configuration information is used for LTM; the other piece of reference configuration information includes another piece of second indication information, indicating that the reference configuration information is used for selective activation of cell groups. For another example, the quantity of reference configuration information may be one, including two pieces of second indication information: one piece of second indication information indicates that the reference configuration information is used for selective activation of cell groups, and the other piece of second indication information indicates that the reference configuration information is used for LTM.

The second indication information may include: an identifier of at least one candidate configuration of the specified mobility operation for which the reference configuration information is used. For example, if the second indication information indicates that the specified mobility operation for which the reference configuration information is used is LTM, the second indication information may include identifiers of at least one candidate configuration of LTM, for example, the identifier of candidate configuration 1, candidate configuration 2, candidate configuration 3. Correspondingly, the terminal may combine candidate configuration 1 of LTM and the reference configuration information to generate one complete candidate configuration information corresponding to candidate configuration 1; the terminal may combine candidate configuration 2 of LTM and the reference configuration information to generate one complete candidate configuration information corresponding to candidate configuration 2; the terminal may combine candidate configuration 3 of LTM and the reference configuration information to generate one complete candidate configuration information corresponding to candidate configuration 3.

For example, if the second indication information indicates that the specified mobility operation for which the reference configuration information is used is selective activation of cell groups, the second indication information may include identifiers of at least one candidate configuration of selective activation of cell groups, for example, the identifier of candidate configuration 4, candidate configuration 5. Correspondingly, the terminal may combine candidate configuration 4 and the reference configuration information to generate one complete candidate configuration information corresponding to candidate configuration 4; the terminal may combine candidate configuration 5 and the reference configuration information to generate one complete candidate configuration information corresponding to candidate configuration 5.

In this example, in another case, the quantity of reference configuration information is at least one, and each piece of reference configuration information is associated with at least one type of specified mobility operation; each type of specified mobility operation is associated with one piece of reference configuration information. For example, the quantity of reference configuration information is two: one is associated with selective activation of cell groups, and the other is associated with LTM. For another example, the quantity of reference configuration information is one, associated with both selective activation of cell groups and LTM.

Each piece of reference configuration information may be associated with an identifier of at least one candidate configuration of the specified mobility operation; each identifier of the candidate configuration is associated with one piece of reference configuration information. For example, the quantity of reference configuration information may be one, associated with identifiers of multiple candidate configurations of selective activation of cell groups and associated with identifiers of multiple candidate configurations of LTM.

In this embodiment of present disclosure, the first message may further include one or more of the following information: a candidate configuration used to configure the specified mobility operation; a candidate configuration used to configure other mobility operations; where the other mobility operations include at least one of: CHO, CPA, CPC.

The reference configuration information for the candidate configuration of the specified mobility operation, the candidate configuration used to configure the specified mobility operation, and the candidate configuration used to configure other mobility operations can all be sent via the first message. However, the first message does not necessarily need to carry these three types of information simultaneously, that is, these three types of information do not necessarily need to be sent at the same time. For example, in one example, the first message may carry these three types of information simultaneously, achieving simultaneous sending of these three types of information. In another example, the network device first sends the reference configuration information via one first message, then sends the candidate configuration used to configure the specified mobility operation via a first message, and later sends the candidate configuration used to configure other mobility operations via a first message.

In another example, the network device first sends the reference configuration information and the candidate configuration used to configure the specified mobility operation via one first message, and then sends the candidate configuration used to configure other mobility operations via another first message.

It should be noted that these three types of information can be split or combined differently, for example, two types of information are carried in the same first message for sending, and the remaining one type of information is carried in another first message for sending, etc., which is not limited here. In addition, the sending order of these three types of information is also not limited. Correspondingly, the terminal may also receive these three types of information simultaneously via one first message, or receive these three types of information via multiple first messages, which is not specifically limited here.

In this embodiment of present disclosure, in one example, the reference configuration information may be carried in an information element used for the specified mobility operation in the first message. In this example, the information element may include the reference configuration information for the candidate configuration of the specified mobility operation; or the information element may include the reference configuration information for the candidate configuration of the specified mobility operation and the candidate configuration used to configure the specified mobility operation.

In this example, the candidate configuration used to configure other mobility operations may be included in an information element used for other mobility operations in the first message. That is, the candidate configuration used to configure other mobility operations and the candidate configuration used to configure the specified mobility operation may be included in different information elements.

In another example, the reference configuration information may be carried in any one of the following information elements in the first message: an information element used for the specified mobility operation, an information element used for other mobility operations; where the other mobility operations include at least one of: CHO, CPA, CPC.

Taking the reference configuration information being carried in an information element used for other mobility operations in the first message as an example, the information element may include the reference configuration information for the candidate configuration of the specified mobility operation; or the information element may include the reference configuration information for the candidate configuration of the specified mobility operation and the candidate configuration used to configure the specified mobility operation.

, the candidate configuration used to configure other mobility operations may also be included in the information element in the first message. That is, the candidate configuration used to configure other mobility operations and the candidate configuration used to configure the specified mobility operation may be included in the same information element.

In this example, when the candidate configuration used to configure other mobility operations and the candidate configuration used to configure the specified mobility operation are both included in the information element used for other mobility operations, first indication information may be configured for the candidate configuration used for the specified mobility operation; the first indication information is associated with the specified mobility operation, distinguishing the candidate configuration used for the specified mobility operation from the candidate configuration used for other mobility operations in the information element, enabling the terminal to accurately obtain the candidate configuration used for the specified mobility operation from the information element used for other mobility operations.

Exemplarily, the first message may be a Radio Resource Control (RRC) message.

Exemplarily, the first message may also be a Media Access Control Control Element (MAC CE) message, and/or a Downlink Control Information (DCI) message.

The method for configuring reference configuration information in this embodiment of present disclosure allows the terminal to receive a first message from a network device, where the first message carries reference configuration information; the reference configuration information is used for a candidate configuration of a specified mobility operation, thereby achieving configuration of reference configuration information for the candidate configuration of at least one specified mobility operation, facilitating generation of complete candidate configuration information for at least one specified mobility operation for mobility operation processing, improving the configuration efficiency of reference configuration information, and improving mobility operation efficiency.

It should be noted that the above possible implementation methods may be performed alone or in combination, which is not limited in this embodiment of present disclosure.

Please refer to FIG. 3. FIG. 3 is a schematic flowchart of another method for configuring reference configuration information provided by an embodiment of present disclosure. The method may be performed by the terminal in FIG. 1.

The method for configuring reference configuration information may be performed alone, or in combination with any embodiment in present disclosure or possible implementation methods in the embodiments, or in combination with any technical solution in the related art.

As shown in FIG. 3, the method may include, but is not limited to, the following steps:

Step S301: Receive a first message, where the first message carries reference configuration information; the reference configuration information is used for a candidate configuration of a specified mobility operation; the reference configuration information is configured with a first parameter of a setup/release type.

Exemplarily, the setup/release type may be a SetupRelease type.

In this embodiment of present disclosure, a field may be set in the first message for placing the reference configuration information for the candidate configuration of the specified mobility operation, i.e., the field is the field corresponding to the reference configuration information. The field may be configured with a first parameter of a setup/release type, and the first parameter is used to instruct the terminal on the processing operation for the reference configuration information. The first parameter may be set in another field in the first message.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

A detailed explanation of step S301 can refer to the description of step S201 in the embodiment shown in FIG. 2, which will not be repeated here.

Step S302: In response to the first parameter being set to a first state, perform configuration processing or reconfiguration processing on the reference configuration information.

In this embodiment of present disclosure, when the first parameter is set to the first state, it is used to instruct the terminal to perform configuration processing or reconfiguration processing on the reference configuration information, and then the terminal may perform configuration processing or reconfiguration processing on the reference configuration information carried in the received first message. The first state may be, for example, setup.

It should be noted that the sending timing of the first message carrying the first parameter set to the first state and the reference configuration information may be when the terminal has not configured the reference configuration information before; or has configured the reference configuration information but has performed release or deletion processing and needs to be reconfigured.

If the first message does not carry the first parameter, the terminal may directly perform configuration processing on the reference configuration information.

If the first message carries the first parameter, the terminal may perform reconfiguration processing on the reference configuration information.

In this embodiment of present disclosure, the quantity of reference configuration information is one or more. If the quantity of reference configuration information is multiple, it may be determined, through indication by the network device or protocol specification, which reference configuration information among the multiple requires the first state, i.e., through indication by the network device or protocol specification, an association relationship is established between the first parameter set to the first state and at least one reference configuration information that requires the first state, to instruct the terminal to perform configuration processing or reconfiguration processing on the at least one reference configuration information.

Step S303: In response to the first parameter being set to a second state, perform release processing or deletion processing on the stored reference configuration information.

In this embodiment of present disclosure, when the first parameter is set to the second state, it is used to instruct the terminal to perform release processing or deletion processing on the stored reference configuration information. Correspondingly, the terminal may obtain the reference configuration information carried in the first message, obtain the reference configuration information from the stored at least one reference configuration information, and perform release or deletion processing on the stored reference configuration information. The second state may be, for example, release.

It should be noted that the sending timing of the first message carrying the first parameter set to the second state and the reference configuration information may be when the terminal has configured or reconfigured the reference configuration information and needs to release or delete it after use. At this sending timing, the network device may send the first message carrying the first parameter set to the second state and the reference configuration information to the terminal.

That is, before receiving the first message carrying the first parameter set to the second state and the reference configuration information, the terminal has received a first message carrying the reference configuration information, or has received a first message carrying the reference configuration information and the first parameter set to the first state; and based on the reference configuration information in the received first message, combined with the candidate configuration of the specified mobility operation for which the reference configuration information is used, generated complete candidate configuration information.

In this embodiment of present disclosure, the quantity of reference configuration information is one or more. If the quantity of reference configuration information is multiple, it may be determined, through indication by the network device or protocol specification, which reference configuration information among the multiple requires the second state, i.e., through indication by the network device or protocol specification, an association relationship is established between the first parameter set to the second state and at least one reference configuration information that requires the second state, to instruct the terminal to perform configuration processing or reconfiguration processing on the at least one reference configuration information.

For a specific first message, the value of the first parameter in the first message is fixed, either the first state or the second state. Correspondingly, step S302 and step S303 may be performed alternatively.

In addition, it should be noted that for a specific first message, if the quantity of reference configuration information in the first message is multiple, and the quantity of first parameters is multiple, different first parameters are placed in different fields in the first message and are used to associate with different reference configuration information. For example, the quantity of reference configuration information is two, and the quantity of first parameters is two, located in field 1 and field 2 in the first message, respectively. Through indication by the network device or protocol specification, it is indicated that the first parameter in field 1 (value is the first state) is used for the first reference configuration information (used for the candidate configuration of selective activation of cell groups), and the first parameter in field 2 (value is the second state) is used for the second reference configuration information (used for the candidate configuration of LTM). This instructs the terminal to perform configuration processing or reconfiguration processing on the reference configuration information for the candidate configuration of selective activation of cell groups, and instructs the terminal to perform release or deletion processing on the stored reference configuration information for the candidate configuration of LTM.

The method for configuring reference configuration information in this embodiment of present disclosure allows the terminal to receive a first message carrying reference configuration information; the reference configuration information is used for a candidate configuration of a specified mobility operation; the reference configuration information is configured with a first parameter of a setup/release type; in response to the first parameter being set to a first state, perform configuration processing or reconfiguration processing on the reference configuration information; in response to the first parameter being set to a second state, perform release processing or deletion processing on the stored reference configuration information, thereby achieving configuration, reconfiguration, release, or deletion processing of the reference configuration information for the candidate configuration of at least one specified mobility operation, facilitating adjustment of the reference configuration information for the candidate configuration of at least one specified mobility operation, and then enabling the terminal to generate complete candidate configuration information based on the latest reference configuration information for mobility operation processing; improving the configuration efficiency of reference configuration information and improving mobility operation efficiency.

It should be noted that the above possible implementation methods may be performed alone or in combination, which is not limited in this embodiment of present disclosure.

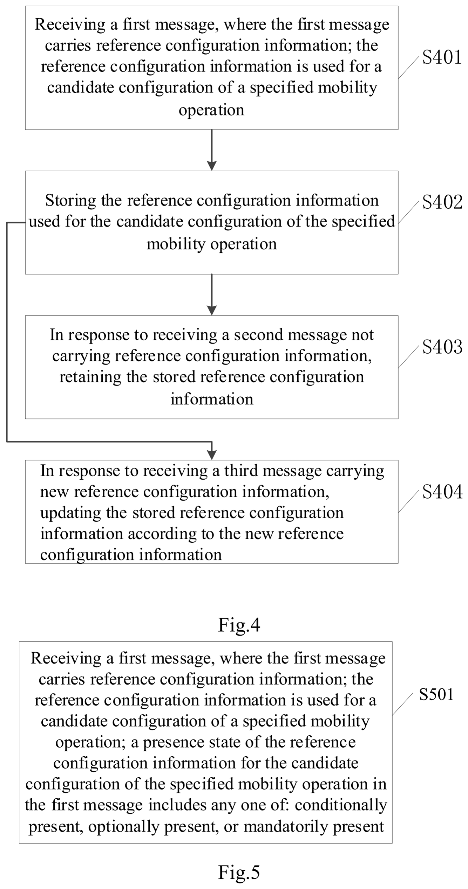

Please refer to FIG. 4. FIG. 4 is a schematic flowchart of another method for configuring reference configuration information provided by an embodiment of present disclosure. The method may be performed by the terminal in FIG. 1.

The method for configuring reference configuration information may be performed alone, or in combination with any embodiment in present disclosure or possible implementation methods in the embodiments, or in combination with any technical solution in the related art.

As shown in FIG. 4, the method may include, but is not limited to, the following steps:

Step S401: Receive a first message, where the first message carries reference configuration information; the reference configuration information is used for a candidate configuration of a specified mobility operation.

Exemplarily, the Need Code for the field corresponding to the reference configuration information is Need M.

Step S402: Store the reference configuration information used for the candidate configuration of the specified mobility operation.

In this embodiment of present disclosure, after receiving the first message, the terminal may determine the specified mobility operation for which the reference configuration information is used; determine whether a first reference configuration information used for the candidate configuration of the specified mobility operation is stored therein. If the terminal does not store the first reference configuration information, it obtains a specified field in the terminal, which is used to store the reference configuration information for the specified mobility operation; and stores the first reference configuration information carried in the first message in the specified field. If the terminal stores the first reference configuration information, it updates the stored first reference configuration information according to the reference configuration information carried in the first message.

Step S403: In response to receiving a second message not carrying reference configuration information, retain the stored reference configuration information.

Exemplarily, the Need Code for the field corresponding to the reference configuration information is Need M.

In this embodiment of present disclosure, the second message may further include one or more of the following information: a candidate configuration used to configure the specified mobility operation; a candidate configuration used to configure other mobility operations; where the other mobility operations include at least one of: CHO, CPA, CPC.

In this embodiment of present disclosure, after step S402, when the terminal receives a second message not carrying reference configuration information, it may retain the previously stored reference configuration information for the specified mobility operation. For example, if the second message also includes a candidate configuration used to configure the specified mobility operation, the terminal may combine the previously stored reference configuration information for the specified mobility operation and the candidate configuration used to configure the specified mobility operation in the second message to generate complete candidate configuration information for the specified mobility operation.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

In step S401, if the specified mobility operation includes LTM and selective activation of cell groups, after performing step S402, the terminal may store reference configuration information for LTM and reference configuration information for selective activation of cell groups. After the terminal receives a second message not carrying reference configuration information, the terminal may retain the stored reference configuration information for LTM and the stored reference configuration information for selective activation of cell groups.

Step S404: In response to receiving a third message carrying new reference configuration information, update the stored reference configuration information according to the new reference configuration information.

Exemplarily, the Need Code for the field corresponding to the reference configuration information is Need M.

In this embodiment of present disclosure, after step S402 or step S403, when the terminal receives a third message, it may obtain the specified mobility operation for which the new reference configuration information in the third message is used; and update the stored reference configuration information for the specified mobility operation according to the new reference configuration information.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

In step S401, if the specified mobility operation includes LTM and selective activation of cell groups, after performing step S402, the terminal may store reference configuration information for LTM and reference configuration information for selective activation of cell groups. After the terminal receives a third message, in one example, the third message carries new reference configuration information for LTM and selective activation of cell groups, then the terminal may update the stored reference configuration information for LTM according to the new reference configuration information for LTM; the terminal may update the stored reference configuration information for selective activation of cell groups according to the new reference configuration information for selective activation of cell groups.

After the terminal receives the third message, in another example, the third message carries new reference configuration information for LTM, then the terminal may update the stored reference configuration information for LTM according to the new reference configuration information for LTM; the terminal may retain the stored reference configuration information for selective activation of cell groups.

The method for configuring reference configuration information in this embodiment of present disclosure allows the terminal to receive a first message carrying reference configuration information; the reference configuration information is used for a candidate configuration of a specified mobility operation; store the reference configuration information used for the candidate configuration of the specified mobility operation; in response to receiving a second message not carrying reference configuration information, retain the stored reference configuration information; in response to receiving a third message carrying new reference configuration information, update the stored reference configuration information according to the new reference configuration information, thereby achieving update processing of the reference configuration information for the candidate configuration of at least one specified mobility operation, and then enabling the terminal to generate complete candidate configuration information based on the updated reference configuration information for mobility operation processing; improving the configuration efficiency of reference configuration information and improving mobility operation efficiency.

It should be noted that the above possible implementation methods may be performed alone or in combination, which is not limited in this embodiment of present disclosure.

Please refer to FIG. 5. FIG. 5 is a schematic flowchart of another method for configuring reference configuration information provided by an embodiment of present disclosure. The method may be performed by the terminal in FIG. 1.

The method for configuring reference configuration information may be performed alone, or in combination with any embodiment in present disclosure or possible implementation methods in the embodiments, or in combination with any technical solution in the related art.

As shown in FIG. 5, the method may include, but is not limited to, the following steps:

Step S501: Receive a first message, where the first message carries reference configuration information; the reference configuration information is used for a candidate configuration of a specified mobility operation; a presence state of the reference configuration information for the candidate configuration of the specified mobility operation in the first message includes any one of: conditionally present, optionally present, or mandatorily present.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

In this embodiment of present disclosure, the first message may further include one or more of the following information: a candidate configuration used to configure the specified mobility operation; a candidate configuration used to configure other mobility operations; where the other mobility operations include at least one of: CHO, CPA, CPC.

In this embodiment of present disclosure, "optionally present" means that the reference configuration information for the candidate configuration of the specified mobility operation may be present in the first message (i.e., the first message includes a field for placing or containing the reference configuration information), or may not be present in the first message (i.e., the first message does not include a field for placing or containing the reference configuration information). That is, the first message received by the terminal may carry the reference configuration information for the candidate configuration of the specified mobility operation; or the first message received by the terminal may not carry the reference configuration information for the candidate configuration of the specified mobility operation.

In this embodiment of present disclosure, "mandatorily present" means that the reference configuration information for the candidate configuration of the specified mobility operation must be present in the first message (i.e., the first message must include a field for placing or containing the reference configuration information). That is, the first message received by the terminal must carry the reference configuration information for the candidate configuration of the specified mobility operation.

In this embodiment of present disclosure, "not present" means that the reference configuration information for the candidate configuration of the specified mobility operation is not present in the first message (i.e., the first message does not include a field for placing or containing the reference configuration information). That is, the first message received by the terminal does not carry or cannot carry the reference configuration information for the candidate configuration of the specified mobility operation.

In this embodiment of present disclosure, "conditionally present" means that, when a condition is met, the reference configuration information for the candidate configuration of the specified mobility operation is mandatorily presented or optionally presented in the first message; when the condition is not met, the reference configuration information for the candidate configuration of the specified mobility operation is optionally presented or not present in the first message.

In this embodiment of present disclosure, in one example, the reference configuration information for the candidate configuration of the specified mobility operation is conditionally presented in the first message, and a presence condition of the reference configuration information is one or more of: the reference configuration information is not stored in the terminal, or the reference configuration information is not configured.

Exemplarily, when the reference configuration information is not stored in the terminal or the reference configuration information is not configured, the reference configuration information is mandatorily presented in the first message; and/or when the reference configuration information is stored in the terminal or the reference configuration information is configured in the terminal, the reference configuration information is optionally presented in the first message.

In this example, in one case, the presence condition of the reference configuration information is that the reference configuration information is not stored in the terminal. Correspondingly, when the reference configuration information is not stored in the terminal, the terminal will receive a first message carrying the reference configuration information for the candidate configuration of the specified mobility operation. When the reference configuration information is stored in the terminal, the terminal may receive a first message carrying the reference configuration information for the candidate configuration of the specified mobility operation, or the terminal may receive a first message not carrying the reference configuration information for the candidate configuration of the specified mobility operation.

Alternatively, when the reference configuration information is stored in the terminal, it may indicate that the terminal has previously received a first message carrying the reference configuration information for the candidate configuration of the specified mobility operation.

**In** this example, in another case, the presence condition of the reference configuration information is that the reference configuration information is not configured. Correspondingly, when the reference configuration information is not configured, the terminal will receive a first message carrying the reference configuration information for the candidate configuration of the specified mobility operation. When the reference configuration information is configured, the terminal may receive a first message carrying the reference configuration information for the candidate configuration of the specified mobility operation, or the terminal may receive a first message not carrying the reference configuration information for the candidate configuration of the specified mobility operation.

Alternatively, when the reference configuration information is configured, it may indicate that the terminal has previously received a first message carrying the reference configuration information for the candidate configuration of the specified mobility operation.

**In** this embodiment of present disclosure, in another example, the reference configuration information for the candidate configuration of the specified mobility operation is conditionally presented in the first message, and the presence condition of the reference configuration information is that the terminal is configured with the specified mobility operation.

Exemplarily, when the terminal is configured with the specified mobility operation, the reference configuration information is optionally presented in the first message; and/or when the terminal is not configured with the specified mobility operation, the reference configuration information is not present in the first message.

In this example, when the terminal is configured with the specified mobility operation, the terminal may receive a first message carrying the reference configuration information for the candidate configuration of the specified mobility operation, or the terminal may receive a first message not carrying the reference configuration information for the candidate configuration of the specified mobility operation. When the terminal is not configured with the specified mobility operation, the terminal will receive a first message not carrying the reference configuration information for the candidate configuration of the specified mobility operation.

Exemplarily, the terminal being configured with the specified mobility operation includes one or more of the following situations: (1) before receiving the first message, the terminal has been configured with the configuration of the specified mobility operation; (2) the terminal stores the configuration of the specified mobility operation; (3) the first message includes the configuration for the specified mobility operation. The configuration of the specified mobility operation here may include at least one of: the reference configuration information for the specified mobility operation, the candidate configuration for the specified mobility operation.

In this example, the first message including the candidate configuration for the specified mobility operation may include the following two situations. One situation is that the information element for the specified mobility operation in the first message carries the candidate configuration for the specified mobility operation; or the information element for other mobility operations in the first message carries the candidate configuration for the specified mobility operation.

Another situation is that the first message may include an information element for other mobility operations, and the information element may carry the candidate configuration for other mobility operations and also carry the candidate configuration for the specified mobility operation; therefore, it can be distinguished by first indication information, for example, the candidate configuration associated with the first indication information is for the specified mobility operation; the candidate configuration not associated with the first indication information is for other mobility operations. The other mobility operations include at least one of: CHO, CPA, CPC.

In this embodiment of present disclosure, in another example, the reference configuration information for the candidate configuration of the specified mobility operation is conditionally presented in the first message, and the presence condition of the reference configuration information is one or more of: candidate configuration information corresponding to a mobility operation for which the reference configuration information is used is already stored in the terminal, or candidate configuration information corresponding to a mobility operation for which the reference configuration information is used is configured.

Exemplarily, when the presence condition is met, the reference configuration information is optionally presented in the first message; and/or when the presence condition is not met, the reference configuration information is not present in the first message.

In this example, in one case, the presence condition of the reference configuration information is that the candidate configuration information corresponding to the mobility operation for which the reference configuration information is used is already stored in the terminal. Correspondingly, when the candidate configuration information corresponding to the mobility operation for which the reference configuration information is used is already stored in the terminal, the terminal may receive a first message carrying the reference configuration information for the candidate configuration of the specified mobility operation, or the terminal may receive a first message not carrying the reference configuration information for the candidate configuration of the specified mobility operation. When the candidate configuration information corresponding to the mobility operation for which the reference configuration information is used is not stored in the terminal, the terminal will receive a first message not carrying the reference configuration information for the candidate configuration of the specified mobility operation.

Alternatively, when the candidate configuration information corresponding to the mobility operation for which the reference configuration information is used is already stored in the terminal, it may indicate that the terminal has previously received a first message carrying the candidate configuration information corresponding to the mobility operation, or the terminal has previously received another message carrying the candidate configuration information corresponding to the mobility operation.

In this example, in another case, the presence condition of the reference configuration information is that the candidate configuration information corresponding to the mobility operation for which the reference configuration information is used is configured. Correspondingly, when the candidate configuration information corresponding to the mobility operation for which the reference configuration information is used is configured, the terminal may receive a first message carrying the reference configuration information for the candidate configuration of the specified mobility operation, or the terminal may receive a first message not carrying the reference configuration information for the candidate configuration of the specified mobility operation. When the candidate configuration information corresponding to the mobility operation for which the reference configuration information is used is not configured, the terminal will receive a first message not carrying the reference configuration information for the candidate configuration of the specified mobility operation.

Exemplarily, the candidate configuration information corresponding to the mobility operation for which the reference configuration information is used being configured includes one or more of the following situations: (1) before receiving the first message, the terminal has been configured with the candidate configuration information corresponding to the mobility operation for which the reference configuration information is used; (2) the terminal stores the candidate configuration information corresponding to the mobility operation for which the reference configuration information is used; (3) the first message includes the candidate configuration information corresponding to the mobility operation for which the reference configuration information is used.

In this example, the first message including the candidate configuration information corresponding to the mobility operation for which the reference configuration information is used may include the following two situations. One situation is that the information element for the specified mobility operation in the first message carries the candidate configuration for the specified mobility operation; or the information element for other mobility operations in the first message carries the candidate configuration for the specified mobility operation.

Another situation is that the first message may include an information element for other mobility operations, and the information element may carry the candidate configuration for other mobility operations and also carry the candidate configuration for the specified mobility operation; therefore, it can be distinguished by first indication information, for example, the candidate configuration associated with the first indication information is for the specified mobility operation; the candidate configuration not associated with the first indication information is for other mobility operations. The other mobility operations include at least one of: CHO, CPA, CPC.

The method for configuring reference configuration information in this embodiment of present disclosure allows the terminal to receive a first message carrying reference configuration information; the reference configuration information is used for a candidate configuration of a specified mobility operation; the presence state of the reference configuration information for the candidate configuration of the specified mobility operation in the first message includes any one of: conditionally present, optionally present, or mandatorily present; thereby achieving configuration of the reference configuration information for the candidate configuration of at least one specified mobility operation, and then enabling the terminal to generate complete candidate configuration information based on the configured reference configuration information for mobility operation processing; improving the configuration efficiency of reference configuration information and improving mobility operation efficiency.

It should be noted that the above possible implementation methods may be performed alone or in combination, which is not limited in this embodiment of present disclosure.

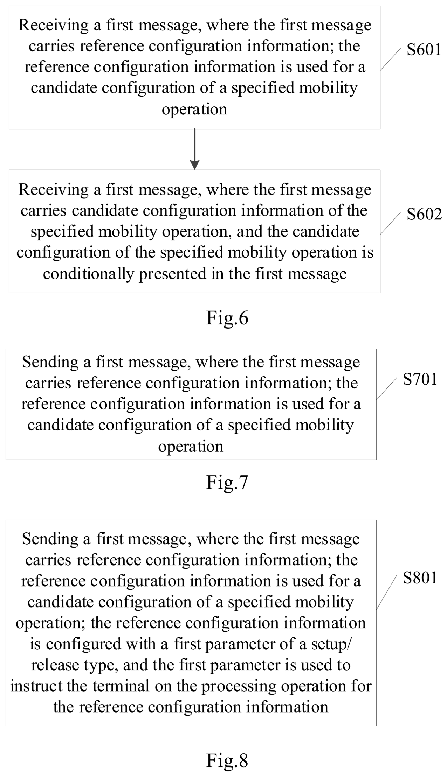

Please refer to FIG. 6. FIG. 6 is a schematic flowchart of another method for configuring reference configuration information provided by an embodiment of present disclosure. The method may be performed by the terminal in FIG. 1.

The method for configuring reference configuration information may be performed alone, or in combination with any embodiment in present disclosure or possible implementation methods in the embodiments, or in combination with any technical solution in the related art.

As shown in FIG. 6, the method may include, but is not limited to, the following steps:
Step S601: Receive a first message, where the first message carries reference configuration information; the reference configuration information is used for a candidate configuration of a specified mobility operation.
Step S602: Receive a first message, where the first message carries candidate configuration information of the specified mobility operation, and the candidate configuration of the specified mobility operation is conditionally presented in the first message.

In this embodiment of present disclosure, it should be noted that, in one example, step S601 and step S602 may be performed simultaneously, i.e., the first messages in these two steps may be received at the same time. In other words, the first messages in these two steps may be the same first message, and the same first message may carry the reference configuration information for the candidate configuration of the specified mobility operation and the candidate configuration information of the specified mobility operation.

In another example, step S601 and step S602 may not be performed simultaneously, i.e., the first messages in these two steps may be received at different times. In other words, the reference configuration information for the candidate configuration of the specified mobility operation may be carried in one first message, and the candidate configuration information of the specified mobility operation may be carried in another first message.

It should be noted that, when step S601 and step S602 are not performed simultaneously, step S601 may be performed first, followed by step S602; or step S602 may be performed first, followed by step S601. The execution order of step S601 and step S602 is not limited here. Step S601 and S602 may also only perform one or both of S601 and S602, which is not limited in this embodiment.

In this embodiment of present disclosure, "conditionally present" may mean that, based on condition judgment, the candidate configuration information of the specified mobility operation is any one or more of: mandatorily present, optionally present, or not present.

In this embodiment of present disclosure, "mandatorily present" means that the reference configuration information for the candidate configuration of the specified mobility operation must be present in the first message (i.e., the first message must include a field for placing or containing the reference configuration information). That is, the first message received by the terminal must carry the reference configuration information for the candidate configuration of the specified mobility operation.

In this embodiment of present disclosure, "not present" means that the reference configuration information for the candidate configuration of the specified mobility operation is not present in the first message (i.e., the first message does not include a field for placing or containing the reference configuration information). That is, the first message received by the terminal does not carry or cannot carry the reference configuration information for the candidate configuration of the specified mobility operation.

In this embodiment of present disclosure, "optionally present" means that the reference configuration information for the candidate configuration of the specified mobility operation may be present in the first message (i.e., the first message includes a field for placing or containing the reference configuration information), or may not be present in the first message (i.e., the first message does not include a field for placing or containing the reference configuration information). That is, the first message received by the terminal may carry the reference configuration information for the candidate configuration of the specified mobility operation; or the first message received by the terminal may not carry the reference configuration information for the candidate configuration of the specified mobility operation.

In this embodiment of present disclosure, the first message may further include one or more of the following information: a candidate configuration used to configure the specified mobility operation; a candidate configuration used to configure other mobility operations. The other mobility operations include at least one of: CHO, CPA, CPC.

In this embodiment of present disclosure, the presence condition of the candidate configuration information corresponding to the specified mobility operation in the first message is one or more of: the reference configuration information is already stored in the terminal, or the reference configuration information is configured.

Exemplarily, when the presence condition is met, the candidate configuration information is optionally presented in the first message; and/or when the presence condition is not met, the candidate configuration information is not present in the first message.

In this embodiment of present disclosure, in one example, the presence condition of the candidate configuration information corresponding to the specified mobility operation in the first message is that the reference configuration information is already stored in the terminal. Correspondingly, when the reference configuration information is already stored in the terminal, the terminal may receive a first message carrying the candidate configuration information corresponding to the specified mobility operation; or the terminal may receive a first message not carrying the candidate configuration information corresponding to the specified mobility operation. When the reference configuration information is not stored in the terminal, the terminal will receive a first message not carrying the candidate configuration information corresponding to the specified mobility operation.

In this example, when the reference configuration information is already stored in the terminal, the first message received by the terminal may carry the reference configuration information for the candidate configuration of the specified mobility operation and the candidate configuration information corresponding to the specified mobility operation; or the first message received by the terminal may carry the reference configuration information for the candidate configuration of the specified mobility operation.

Alternatively, when the reference configuration information is stored in the terminal, it may indicate that the terminal has previously received a first message carrying the reference configuration information for the candidate configuration of the specified mobility operation.

In this embodiment of present disclosure, in another example, the presence condition of the candidate configuration information corresponding to the specified mobility operation in the first message is that the reference configuration information is configured. Correspondingly, when the reference configuration information is configured, the terminal may receive a first message carrying the candidate configuration information corresponding to the specified mobility operation; or the terminal may receive a first message not carrying the candidate configuration information corresponding to the specified mobility operation. When the reference configuration information is not configured, the terminal will receive a first message not carrying the candidate configuration information corresponding to the specified mobility operation.

In this example, when the reference configuration information is configured, the first message received by the terminal may carry the reference configuration information for the candidate configuration of the specified mobility operation and the candidate configuration information corresponding to the specified mobility operation; or the first message received by the terminal may carry the reference configuration information for the candidate configuration of the specified mobility operation.

Alternatively, when the reference configuration information is configured, it may indicate that the terminal has previously received a first message carrying the reference configuration information for the candidate configuration of the specified mobility operation.

The method for configuring reference configuration information in this embodiment of present disclosure allows the terminal to receive a first message carrying reference configuration information; the reference configuration information is used for a candidate configuration of a specified mobility operation; receive a first message carrying candidate configuration information of the specified mobility operation, where the candidate configuration of the specified mobility operation is conditionally presented in the first message, thereby achieving configuration of the reference configuration information for the candidate configuration of at least one specified mobility operation, and then enabling the terminal to generate complete candidate configuration information based on the stored candidate configuration information or the candidate configuration information carried in the first message and the reference configuration information for mobility operation processing; improving the configuration efficiency of reference configuration information and improving mobility operation efficiency.

It should be noted that the above possible implementation methods may be performed alone or in combination, which is not limited in this embodiment of present disclosure.

Please refer to FIG. 7. FIG. 7 is a schematic flowchart of a method for configuring reference configuration information provided by an embodiment of present disclosure. The method may be performed by the network device in FIG. 1. As shown in FIG. 7, the method may include, but is not limited to, the following steps:
Step S701: Send a first message, where the first message carries reference configuration information; the reference configuration information is used for a candidate configuration of a specified mobility operation.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

In this embodiment of present disclosure, the quantity of reference configuration information is one or more. In one example, one piece of reference configuration information is used for the candidate configuration of one specified mobility operation. Correspondingly, one or more fields may be set in the first message, each field for placing the reference configuration information used for the candidate configuration of one specified mobility operation.

Taking the specified mobility operation including LTM and selective activation of cell groups as an example, the first message may include two fields: one field for placing the reference configuration information used for the candidate configuration of LTM; and another field for placing the reference configuration information used for the candidate configuration of selective activation of cell groups.

Exemplarily, if one mobility operation corresponds to one piece of reference configuration information, then the reference configuration information is applicable to all candidate configurations of this mobility operation, that is, this reference configuration information is a universal reference configuration information for this mobility operation.

**In** this example, for selective activation of cell groups, the quantity of candidate configurations for selective activation of cell groups may be multiple, and the multiple candidate configurations may use the reference configuration information used for the candidate configuration of selective activation of cell groups. That is, the reference configuration information used for the candidate configuration of selective activation of cell groups can be combined with the multiple candidate configurations of selective activation of cell groups to generate complete multiple candidate configuration information for mobility operation.

In this example, for LTM, the quantity of candidate configurations for LTM may be multiple, and the multiple candidate configurations may use the reference configuration information used for the candidate configuration of LTM. That is, the reference configuration information used for the candidate configuration of LTM can be combined with the multiple candidate configurations of LTM to generate complete multiple candidate configuration information for mobility operation.

In this embodiment of present disclosure, in another example, one piece of reference configuration information may be used for the candidate configuration of one or more specified mobility operations. In this example, the first message sets a correspondence between the reference configuration information and the specified mobility operation, or the first message sets a correspondence between the reference configuration information and the candidate configuration of the specified mobility operation.

In this example, in one case, the reference configuration information may include or be associated with at least one piece of second indication information, and the second indication information is used to indicate the specified mobility operation for which the reference configuration information is used. The reference configuration information may include at least one piece of second indication information; or the reference configuration information may be associated with at least one piece of second indication information. For example, the quantity of reference configuration information may be two: one piece of reference configuration information includes one piece of second indication information, indicating that the reference configuration information is used for LTM; the other piece of reference configuration information includes another piece of second indication information, indicating that the reference configuration information is used for selective activation of cell groups. For another example, the quantity of reference configuration information may be one, including two pieces of second indication information: one piece of second indication information indicates that the reference configuration information is used for selective activation of cell groups, and the other piece of second indication information indicates that the reference configuration information is used for LTM.

The second indication information may include: an identifier of at least one candidate configuration of the specified mobility operation for which the reference configuration information is used. For example, if the second indication information indicates that the specified mobility operation for which the reference configuration information is used is LTM, the second indication information may include identifiers of at least one candidate configuration of LTM, for example, the identifier of candidate configuration 1, candidate configuration 2, candidate configuration 3. Correspondingly, the terminal may combine candidate configuration 1 of LTM and the reference configuration information to generate one complete candidate configuration information corresponding to candidate configuration 1; the terminal may combine candidate configuration 2 of LTM and the reference configuration information to generate one complete candidate configuration information corresponding to candidate configuration 2; the terminal may combine candidate configuration 3 of LTM and the reference configuration information to generate one complete candidate configuration information corresponding to candidate configuration 3.

For example, if the second indication information indicates that the specified mobility operation for which the reference configuration information is used is selective activation of cell groups, the second indication information may include identifiers of at least one candidate configuration of selective activation of cell groups, for example, the identifier of candidate configuration 4, candidate configuration 5. Correspondingly, the terminal may combine candidate configuration 4 and the reference configuration information to generate one complete candidate configuration information corresponding to candidate configuration 4; the terminal may combine candidate configuration 5 and the reference configuration information to generate one complete candidate configuration information corresponding to candidate configuration 5.

In this example, in another case, the quantity of reference configuration information is at least one, and each piece of reference configuration information is associated with at least one type of specified mobility operation; each type of specified mobility operation is associated with one piece of reference configuration information. For example, the quantity of reference configuration information is two: one is associated with selective activation of cell groups, and the other is associated with LTM. For another example, the quantity of reference configuration information is one, associated with both selective activation of cell groups and LTM.

Each piece of reference configuration information may be associated with an identifier of at least one candidate configuration of the specified mobility operation; each identifier of the candidate configuration is associated with one piece of reference configuration information. For example, the quantity of reference configuration information may be one, associated with identifiers of multiple candidate configurations of selective activation of cell groups and associated with identifiers of multiple candidate configurations of LTM.

In this embodiment of present disclosure, the first message may further include one or more of the following information: a candidate configuration used to configure the specified mobility operation; a candidate configuration used to configure other mobility operations; where the other mobility operations include at least one of: CHO, CPA, CPC.

The reference configuration information for the candidate configuration of the specified mobility operation, the candidate configuration used to configure the specified mobility operation, and the candidate configuration used to configure other mobility operations can all be sent via the first message. However, the first message does not necessarily need to carry these three types of information simultaneously, that is, these three types of information do not necessarily need to be sent at the same time. For example, in one example, the first message may carry these three types of information simultaneously, achieving simultaneous sending of these three types of information. In another example, the network device first sends the reference configuration information via one first message, then sends the candidate configuration used to configure the specified mobility operation via a first message, and later sends the candidate configuration used to configure other mobility operations via a first message.

In another example, the network device first sends the reference configuration information and the candidate configuration used to configure the specified mobility operation via one first message, and then sends the candidate configuration used to configure other mobility operations via another first message.

It should be noted that these three types of information can be split or combined differently, for example, two types of information are carried in the same first message for sending, and the remaining one type of information is carried in another first message for sending, etc., which is not limited here. In addition, the sending order of these three types of information is also not limited. Correspondingly, the terminal may also receive these three types of information simultaneously via one first message, or receive these three types of information via multiple first messages, which is not specifically limited here.

In this embodiment of present disclosure, in one example, the reference configuration information may be carried in an information element used for the specified mobility operation in the first message. In this example, the information element may include the reference configuration information for the candidate configuration of the specified mobility operation; or the information element may include the reference configuration information for the candidate configuration of the specified mobility operation and the candidate configuration used to configure the specified mobility operation.

In this example, the candidate configuration used to configure other mobility operations may be included in an information element used for other mobility operations in the first message. That is, the candidate configuration used to configure other mobility operations and the candidate configuration used to configure the specified mobility operation may be included in different information elements.

In another example, the reference configuration information may be carried in any one of the following information elements in the first message: an information element used for the specified mobility operation, an information element used for other mobility operations; where the other mobility operations include at least one of: CHO, CPA, CPC.

Taking the reference configuration information being carried in an information element used for other mobility operations in the first message as an example, the information element may include the reference configuration information for the candidate configuration of the specified mobility operation; or the information element may include the reference configuration information for the candidate configuration of the specified mobility operation and the candidate configuration used to configure the specified mobility operation.

In this example, the candidate configuration used to configure other mobility operations may also be included in the information element in the first message. That is, the candidate configuration used to configure other mobility operations and the candidate configuration used to configure the specified mobility operation may be included in the same information element.

In this example, when the candidate configuration used to configure other mobility operations and the candidate configuration used to configure the specified mobility operation are both included in the information element used for other mobility operations, first indication information may be configured for the candidate configuration used for the specified mobility operation; the first indication information is associated with the specified mobility operation, distinguishing the candidate configuration used for the specified mobility operation from the candidate configuration used for other mobility operations in the information element, enabling the terminal to accurately obtain the candidate configuration used for the specified mobility operation from the information element used for other mobility operations.

Exemplarily, the first message may be a Radio Resource Control (RRC) message.

Exemplarily, the first message may also be a Media Access Control Control Element (MAC CE) message, and/or a Downlink Control Information (DCI) message.

The method for configuring reference configuration information in this embodiment of present disclosure allows the network device to send a first message carrying reference configuration information; the reference configuration information is used for a candidate configuration of a specified mobility operation, thereby achieving configuration of reference configuration information for the candidate configuration of at least one specified mobility operation, facilitating the terminal to generate complete candidate configuration information for at least one specified mobility operation for mobility operation processing, improving the configuration efficiency of reference configuration information, and improving mobility operation efficiency.

It should be noted that the above possible implementation methods may be performed alone or in combination, which is not limited in this embodiment of present disclosure.

Please refer to FIG. 8. FIG. 8 is a schematic flowchart of another method for configuring reference configuration information provided by an embodiment of present disclosure. The method may be performed by the network device in FIG. 1.

The method for configuring reference configuration information may be performed alone, or in combination with any embodiment in present disclosure or possible implementation methods in the embodiments, or in combination with any technical solution in the related art.

As shown in FIG. 8, the method may include, but is not limited to, the following steps:
Step S801: Send a first message, where the first message carries reference configuration information; the reference configuration information is used for a candidate configuration of a specified mobility operation; the reference configuration information is configured with a first parameter of a setup/release type, and the first parameter is used to instruct the terminal on the processing operation for the reference configuration information.

Exemplarily, the setup/release type may be a SetupRelease type.

In this embodiment of present disclosure, a field may be set in the first message for placing the reference configuration information for the candidate configuration of the specified mobility operation, i.e., the field is the field corresponding to the reference configuration information. The field may be configured with a first parameter of a setup/release type, and the first parameter is used to instruct the terminal on the processing operation for the reference configuration information. The first parameter may be set in another field in the first message.

In this embodiment of present disclosure, the specified mobility operation includes one or more of the following: Layer 1/Layer 2-triggered mobility (LTM), selective activation of cell groups, or a mobility operation, other than LTM and selective activation of cell groups, pre-configured with a candidate configuration. The other mobility operations pre-configured with candidate configurations include, for example, conditional handover (CHO), conditional primary secondary cell change (CPC), conditional primary secondary cell addition (CPA), etc.

In this embodiment of present disclosure, the quantity of reference configuration information is one or more. In one example, one piece of reference configuration information is used for the candidate configuration of one specified mobility operation. Correspondingly, one or more fields may be set in the first message, each field for placing the reference configuration information used for the candidate configuration of one specified mobility operation.

In this embodiment of present disclosure, in another example, one piece of reference configuration information may be used for the candidate configuration of one or more specified mobility operations. In this example, the first message sets a correspondence between the reference configuration information and the specified mobility operation, or the first message sets a correspondence between the reference configuration information and the candidate configuration of the specified mobility operation.

In this example, in one case, the reference configuration information may include or be associated with at least one piece of second indication information, and the second indication information is used to indicate the specified mobility operation for which the reference configuration information is used. The reference configuration information may include at least one piece of second indication information; or the reference configuration information may be associated with at least one piece of second indication information. The second indication information may include: an identifier of at least one candidate configuration of the specified mobility operation for which the reference configuration information is used.

In this example, in another case, the quantity of reference configuration information is at least one, and each piece of reference configuration information is associated with at least one type of specified mobility operation; each type of specified mobility operation is associated with one piece of reference configuration information. where each piece of reference configuration information may be associated with an identifier of at least one candidate configuration of the specified mobility operation; each identifier of the candidate configuration is associated with one piece of reference configuration information.

In this embodiment of present disclosure, in one example, the reference configuration information may be carried in an information element used for the specified mobility operation in the first message. In another example, the reference configuration information may be carried in any one of the following information elements in the first message: an information element used for the specified mobility operation, an information element used for other mobility operations; where the other mobility operations include at least one of: CHO, CPA, CPC.

In this embodiment of present disclosure, when the first parameter is set to a first state, it is used to instruct the terminal to perform configuration processing or reconfiguration processing on the reference configuration information. Correspondingly, the terminal may perform configuration processing or reconfiguration processing on the reference configuration information carried in the received first message. The first state may be, for example, setup.

It should be noted that the sending timing of the first message carrying the first parameter set to the first state and the reference configuration information may be when the terminal has not configured the reference configuration information before; or has configured the reference configuration information but has performed release or deletion processing and needs to be reconfigured.

If the first message does not carry the first parameter, the terminal may directly perform configuration processing on the reference configuration information.

If the first message carries the first parameter, the terminal may perform reconfiguration processing on the reference configuration information.

In this embodiment of present disclosure, the quantity of reference configuration information is one or more. If the quantity of reference configuration information is multiple, it may be determined, through indication by the network device or protocol specification, which reference configuration information among the multiple requires the first state, i.e., through indication by the network device or protocol specification, an association relationship is established between the first parameter set to the first state and at least one reference configuration information that requires the first state, to instruct the terminal to perform configuration processing or reconfiguration processing on the at least one reference configuration information.

In this embodiment of present disclosure, when the first parameter is set to a second state, it is used to instruct the terminal to perform release processing or deletion processing on the stored reference configuration information. Correspondingly, the terminal may obtain the reference configuration information carried in the first message, obtain the reference configuration information from the stored at least one reference configuration information, and perform release or deletion processing on the stored reference configuration information. The second state may be, for example, release.

It should be noted that the sending timing of the first message carrying the first parameter set to the second state and the reference configuration information may be when the terminal has configured or reconfigured the reference configuration information and needs to release or delete it after use. At this sending timing, the network device may send the first message carrying the first parameter set to the second state and the reference configuration information to the terminal.

In this embodiment of present disclosure, the quantity of reference configuration information is one or more. If the quantity of reference configuration information is multiple, it may be determined, through indication by the network device or protocol specification, which reference configuration information among the multiple requires the second state, i.e., through indication by the network device or protocol specification, an association relationship is established between the first parameter set to the second state and at least one reference configuration information that requires the second state, to instruct the terminal to perform configuration processing or reconfiguration processing on the at least one reference configuration information.

In addition, it should be noted that for a specific first message, if the quantity of reference configuration information in the first message is multiple, and the quantity of first parameters is multiple, different first parameters are placed in different fields in the first message and are used to associate with different reference configuration information. For example, the quantity of reference configuration information is two, and the quantity of first parameters is two, located in field 1 and field 2 in the first message, respectively. Through indication by the network device or protocol specification, it is indicated that the first parameter in field 1 (value is the first state) is used for the first reference configuration information (used for the candidate configuration of selective activation of cell groups), and the first parameter in field 2 (value is the second state) is used for the second reference configuration information (used for the candidate configuration of LTM). This instructs the terminal to perform configuration processing or reconfiguration processing on the reference configuration information for the candidate configuration of selective activation of cell groups, and instructs the terminal to perform release or deletion processing on the stored reference configuration information for the candidate configuration of LTM.

In the method for configuring reference configuration information according to an embodiment of present disclosure, a network device can send a first message, where the first message carries reference configuration information; the reference configuration information is used for a candidate configuration of a specified mobility operation; the reference configuration information is configured with a first parameter of a setup/release type; the first parameter is used to instruct a terminal to perform a processing operation on the reference configuration information, thereby implementing configuration, reconfiguration, release, or deletion processing of the reference configuration information for the candidate configuration of at least one specified mobility operation, facilitating adjustment of the reference configuration information for the candidate configuration of the at least one specified mobility operation, and further facilitating the terminal generating complete candidate configuration information based on the latest reference configuration information for mobility operation processing; improving the configuration efficiency of the reference configuration information and improving the efficiency of mobility operations.

It should be noted that these possible implementations described above may be executed alone or in combination, which is not limited in the embodiments of present disclosure.

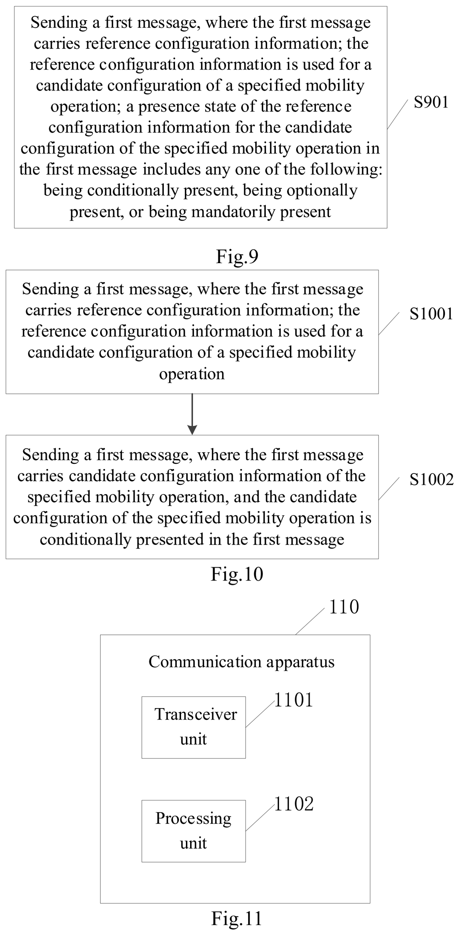

Please refer to FIG. 9. FIG. 9 is a schematic flowchart of another method for configuring reference configuration information provided by an embodiment of present disclosure. The method may be executed by the network device in FIG. 1.

The method for configuring reference configuration information may be executed alone, or in combination with any embodiment or possible implementation in the embodiments of present disclosure, or in combination with any technical solution in the related art.

As shown in FIG. 9, the method may include but is not limited to the following steps:
Step S901: Send a first message, where the first message carries reference configuration information; the reference configuration information is used for a candidate configuration of a specified mobility operation; a presence state of the reference configuration information for the candidate configuration of the specified mobility operation in the first message includes any one of the following: being conditionally present, being optionally present, or being mandatorily present.

Exemplarily, the Need Code of the field corresponding to the reference configuration information is Need M.

In this embodiment of present disclosure, the specified mobility operation includes one or more of the following: Layer 1/Layer 2-triggered mobility (LTM), selective activation of cell groups, or other mobility operations pre-configured with a candidate configuration besides LTM and selective activation of cell groups. The other mobility operations pre-configured with a candidate configuration include, for example, conditional handover (CHO), conditional primary secondary cell change (CPC), conditional primary secondary cell addition (CPA), etc.

In this embodiment of present disclosure, the first message may further include one or more of the following: a candidate configuration used to configure the specified mobility operation, a candidate configuration used to configure other mobility operations; where the other mobility operations include at least one of: CHO, CPA, CPC.

In this embodiment of present disclosure, "being optionally present" means that the reference configuration information for the candidate configuration of the specified mobility operation may be present in the first message (i.e., the first message contains a field for placing or containing this reference configuration information), or may not be present in the first message (i.e., the first message does not contain a field for placing or containing this reference configuration information). That is, the network device may carry the reference configuration information for the candidate configuration of the specified mobility operation in the sent first message; or, the network device may not carry the reference configuration information for the candidate configuration of the specified mobility operation in the sent first message.

In this embodiment of present disclosure, "being mandatorily present" means that the reference configuration information for the candidate configuration of the specified mobility operation must be present in the first message (i.e., the first message must contain a field for placing or containing this reference configuration information). That is, the network device must carry the reference configuration information for the candidate configuration of the specified mobility operation in the sent first message.

In this embodiment of present disclosure, "being not present" means that the reference configuration information for the candidate configuration of the specified mobility operation is not present in the first message (i.e., the first message does not contain a field for placing or containing this reference configuration information). That is, the network device does not carry or cannot carry the reference configuration information for the candidate configuration of the specified mobility operation in the sent first message.

In this embodiment of present disclosure, "being conditionally present" means that, when a condition is met, the reference configuration information for the candidate configuration of the specified mobility operation is mandatorily presented or optionally presented in the first message; when the condition is not met, the reference configuration information for the candidate configuration of the specified mobility operation is optionally presented or not present in the first message.

In this embodiment of present disclosure, in one example, the reference configuration information for the candidate configuration of the specified mobility operation is conditionally presented in the first message, and a presence condition of the reference configuration information is one or more of the following: the reference configuration information is not stored in the terminal, or the reference configuration information is not configured.

Exemplarily, when the reference configuration information is not stored in the terminal, or the reference configuration information is not configured, the reference configuration information is mandatorily presented in the first message; and/or, where the reference configuration information is stored in the terminal, or the reference configuration information is configured in the terminal, the reference configuration information is optionally presented in the first message.

In this example, in one scenario, the presence condition of the reference configuration information is that the reference configuration information is not stored in the terminal. Correspondingly, when the reference configuration information is not stored in the terminal, the network device sends the first message carrying the reference configuration information for the candidate configuration of the specified mobility operation to the terminal. Where the reference configuration information is stored in the terminal, the network device may send the first message carrying the reference configuration information for the candidate configuration of the specified mobility operation to the terminal, or the network device may send the first message not carrying the reference configuration information for the candidate configuration of the specified mobility operation to the terminal.

Alternatively, when the reference configuration information is stored in the terminal, it may indicate that the network device has previously sent a first message carrying the reference configuration information for the candidate configuration of the specified mobility operation to the terminal.

In this example, in another scenario, the presence condition of the reference configuration information is that the reference configuration information is not configured. Correspondingly, when the reference configuration information is not configured, the network device sends the first message carrying the reference configuration information for the candidate configuration of the specified mobility operation to the terminal. Where the reference configuration information is configured, the network device may send the first message carrying the reference configuration information for the candidate configuration of the specified mobility operation to the terminal, or the network device may send the first message not carrying the reference configuration information for the candidate configuration of the specified mobility operation to the terminal.

Alternatively, the reference configuration information is configured, it may indicate that the network device has previously sent a first message carrying the reference configuration information for the candidate configuration of the specified mobility operation to the terminal.

In this embodiment of present disclosure, in another example, the reference configuration information for the candidate configuration of the specified mobility operation is conditionally presented in the first message, and the presence condition of the reference configuration information is that the terminal is configured with the specified mobility operation.

Exemplarily, when the terminal is configured with the specified mobility operation, the reference configuration information is optionally presented in the first message; and/or, when the terminal is not configured with the specified mobility operation, the reference configuration information is not present in the first message.

In this example, when the terminal is configured with the specified mobility operation, the network device may send the first message carrying the reference configuration information for the candidate configuration of the specified mobility operation to the terminal, or the network device may send the first message not carrying the reference configuration information for the candidate configuration of the specified mobility operation to the terminal. Where the terminal is not configured with the specified mobility operation, the network device sends the first message carrying the reference configuration information for the candidate configuration of the specified mobility operation to the terminal.

Exemplarily, the terminal being configured with the specified mobility operation includes one or more of the following situations: (1) before receiving the first message, the terminal has already been configured with the configuration of the specified mobility operation; (2) the terminal stores the configuration of the specified mobility operation; (3) the first message includes the configuration for configuring the specified mobility operation. Here, the configuration of the specified mobility operation may include at least one of the following: reference configuration information of the specified mobility operation, candidate configuration of the specified mobility operation.

In this example, the first message including the candidate configuration for configuring the specified mobility operation may include the following two situations. In one situation, an information element used for the specified mobility operation in the first message carries the candidate configuration for the specified mobility operation; or, an information element used for other mobility operations in the first message carries the candidate configuration for the specified mobility operation.

In another situation, the first message may include an information element used for other mobility operations, where the information element may carry a candidate configuration for the other mobility operations, and also carry a candidate configuration for the specified mobility operation; therefore, it can be distinguished by first indication information, for example, a candidate configuration associated with the first indication information is used for the specified mobility operation; a candidate configuration not associated with the first indication information is used for the other mobility operations. The other mobility operations include at least one of: CHO, CPA, CPC.

In this embodiment of present disclosure, in another example, the reference configuration information for the candidate configuration of the specified mobility operation is conditionally presented in the first message, and the presence condition of the reference configuration information is one or more of the following: candidate configuration information corresponding to a mobility operation for which the reference configuration information is used is already stored in the terminal, or candidate configuration information corresponding to a mobility operation for which the reference configuration information is used is configured.

Exemplarily, when the presence condition is met, the reference configuration information is optionally presented in the first message; and/or, where the presence condition is not met, the reference configuration information is not present in the first message.

In this example, in one scenario, the presence condition of the reference configuration information is that candidate configuration information corresponding to a mobility operation for which the reference configuration information is used is already stored in the terminal. Correspondingly, when the candidate configuration information corresponding to the mobility operation for which the reference configuration information is used is already stored in the terminal, the network device may send the first message carrying the reference configuration information for the candidate configuration of the specified mobility operation to the terminal, or the network device may send the first message not carrying the reference configuration information for the candidate configuration of the specified mobility operation to the terminal. Where the candidate configuration information corresponding to the mobility operation for which the reference configuration information is used is not stored in the terminal, the network device sends the first message carrying the reference configuration information for the candidate configuration of the specified mobility operation to the terminal.

Alternatively, when the candidate configuration information corresponding to the mobility operation for which the reference configuration information is used is already stored in the terminal, it may indicate that the terminal has previously received a first message carrying the candidate configuration information corresponding to that mobility operation, or the terminal has previously received another message carrying the candidate configuration information corresponding to that mobility operation.

In this example, in another scenario, the presence condition of the reference configuration information is that candidate configuration information corresponding to a mobility operation for which the reference configuration information is used is configured. Correspondingly, when the candidate configuration information corresponding to the mobility operation for which the reference configuration information is used is configured, the network device may send the first message carrying the reference configuration information for the candidate configuration of the specified mobility operation to the terminal, or the network device may send the first message not carrying the reference configuration information for the candidate configuration of the specified mobility operation to the terminal. Where the candidate configuration information corresponding to the mobility operation for which the reference configuration information is used is not configured, the network device sends the first message carrying the reference configuration information for the candidate configuration of the specified mobility operation to the terminal.

Exemplarily, the candidate configuration information corresponding to the mobility operation for which the reference configuration information is used being configured includes one or more of the following situations: (1) before receiving the first message, the terminal has already been configured with the candidate configuration information corresponding to the mobility operation for which the reference configuration information is used; (2) the terminal stores the candidate configuration information corresponding to the mobility operation for which the reference configuration information is used; (3) the first message includes the candidate configuration information corresponding to the mobility operation for which the reference configuration information is used.

In this example, the first message including the candidate configuration information corresponding to the mobility operation for which the reference configuration information is used may include the following two situations. In one situation, an information element used for the specified mobility operation in the first message carries the candidate configuration for the specified mobility operation; or, an information element used for other mobility operations in the first message carries the candidate configuration for the specified mobility operation.

In another scenario, the first message may include an information element used for other mobility operations, when the information element may carry a candidate configuration used for other mobility operations, and also carry a candidate configuration used for the specified mobility operation; therefore, it can be distinguished by first indication information, for example, a candidate configuration associated with the first indication information is used for the specified mobility operation; a candidate configuration not associated with the first indication information is used for other mobility operations. Here, other mobility operations include at least one of: CHO, CPA, CPC.

In the method for configuring reference configuration information according to the embodiments of the present application, a network device may send a first message, where the first message carries reference configuration information; the reference configuration information is used for a candidate configuration of a specified mobility operation; a presence state of the reference configuration information for the candidate configuration of the specified mobility operation in the first message includes any one of: conditionally present, optionally present, or mandatorily present; thereby implementing configuration of reference configuration information for the candidate configuration of at least one specified mobility operation, and further enabling a terminal to generate complete candidate configuration information based on the configured reference configuration information for mobility operation processing; improving the configuration efficiency of the reference configuration information and improving the efficiency of mobility operations.

It should be noted that the above possible implementations may be executed alone or in combination, which is not limited in the embodiments of the present application.

Please refer to FIG. 10. FIG. 10 is a schematic flowchart of another method for configuring reference configuration information provided by an embodiment of the present application. The method may be executed by the network device in FIG. 1.

The method for configuring reference configuration information may be executed alone, or in combination with any embodiment or possible implementation in the embodiments of the present application, or in combination with any technical solution in the related art.

As shown in FIG. 10, the method may include, but is not limited to, the following steps:
Step S1001: Send a first message, where the first message carries reference configuration information; the reference configuration information is used for a candidate configuration of a specified mobility operation.
Step S1002: Send a first message, where the first message carries candidate configuration information of the specified mobility operation, and the candidate configuration of the specified mobility operation is conditionally presented in the first message.

In the embodiments of the present application, it should be noted that, in one example, step S1001 and step S1002 may be executed simultaneously, that is, the first messages in these two steps may be sent simultaneously. In other words, the first messages in these two steps may be the same first message, and the same first message may carry the reference configuration information used for the candidate configuration of the specified mobility operation, and the candidate configuration information of the specified mobility operation.

In another example, step S1001 and step S1002 may not be executed simultaneously, that is, the first messages in these two steps may not be sent simultaneously. In other words, the first messages in these two steps may be different messages, that is, the reference configuration information used for the candidate configuration of the specified mobility operation may be carried in one first message, and the candidate configuration information of the specified mobility operation may be carried in another first message.

It should be noted that, in the case where step S1001 and step S1002 are not executed simultaneously, step S1001 may be executed first, followed by step S1002; or, step S1002 may be executed first, followed by step S1001. The execution order of step S1001 and step S1002 is not limited herein. Only one of S1001 and S1002, or both, may be executed, which is not limited in this embodiment.

In the embodiments of the present application, conditionally presented may mean that, based on a condition, the candidate configuration information of the specified mobility operation is determined to be any one or more of: mandatorily present, optionally present, or not present.

In the embodiments of the present application, mandatorily presented means that the reference configuration information used for the candidate configuration of the specified mobility operation must be present in the first message (i.e., the first message must contain a field for placing or containing the reference configuration information). That is, the first message sent by the network device must carry the reference configuration information used for the candidate configuration of the specified mobility operation.

In the embodiments of the present application, not present means that the reference configuration information used for the candidate configuration of the specified mobility operation is not present in the first message (i.e., the first message does not contain a field for placing or containing the reference configuration information). That is, the first message sent by the network device does not carry or cannot carry the reference configuration information used for the candidate configuration of the specified mobility operation.

**In** the embodiments of the present application, optionally presented means that the reference configuration information used for the candidate configuration of the specified mobility operation may be present in the first message (i.e., the first message contains a field for placing or containing the reference configuration information), or may not be present in the first message (i.e., the first message does not contain a field for placing or containing the reference configuration information). That is, the first message sent by the network device may carry the reference configuration information used for the candidate configuration of the specified mobility operation; or, the first message sent by the network device may not carry the reference configuration information used for the candidate configuration of the specified mobility operation.

In the embodiments of the present application, the first message may further include one or more of the following information: a candidate configuration used to configure the specified mobility operation, a candidate configuration used to configure other mobility operations. The other mobility operations include at least one of: CHO, CPA, CPC.

In the embodiments of the present application, the candidate configuration of the specified mobility operation, i.e., a presence condition of the candidate configuration information corresponding to the specified mobility operation in the first message is one or more of: the reference configuration information is already stored in the terminal, or the reference configuration information is configured.

Exemplarily, when the presence condition is met, the candidate configuration information is optionally presented in the first message; and/or, when the presence condition is not met, the candidate configuration information is not present in the first message.

In the embodiments of the present application, in one example, the presence condition of the candidate configuration information corresponding to the specified mobility operation in the first message is that the reference configuration information is already stored in the terminal. Correspondingly, when the reference configuration information is already stored in the terminal, the network device may send a first message carrying the candidate configuration information corresponding to the specified mobility operation to the terminal; or, the network device may send a first message not carrying the candidate configuration information corresponding to the specified mobility operation to the terminal. When the reference configuration information is not stored in the terminal, the network device will send a first message carrying the candidate configuration information corresponding to the specified mobility operation to the terminal.

In this example, when the reference configuration information is already stored in the terminal, the first message sent by the network device may carry the reference configuration information used for the candidate configuration of the specified mobility operation, and the candidate configuration information corresponding to the specified mobility operation; or, the first message sent by the network device may carry the reference configuration information used for the candidate configuration of the specified mobility operation.

Alternatively, when the reference configuration information is stored in the terminal, it may indicate that the terminal previously received a first message carrying the reference configuration information used for the candidate configuration of the specified mobility operation.

In the embodiments of the present application, in another example, the presence condition of the candidate configuration information corresponding to the specified mobility operation in the first message is that the reference configuration information is configured. Correspondingly, when the reference configuration information is configured, the network device may send a first message carrying the candidate configuration information corresponding to the specified mobility operation to the terminal; or, the network device may send a first message not carrying the candidate configuration information corresponding to the specified mobility operation to the terminal. When the reference configuration information is not configured, the network device will send a first message carrying the candidate configuration information corresponding to the specified mobility operation to the terminal.

In this example, when the reference configuration information is configured, the first message sent by the network device may carry the reference configuration information used for the candidate configuration of the specified mobility operation, and the candidate configuration information corresponding to the specified mobility operation; or, the first message sent by the network device may carry the reference configuration information used for the candidate configuration of the specified mobility operation.

Alternatively, when the reference configuration information is configured, it may indicate that the terminal previously received a first message carrying the reference configuration information used for the candidate configuration of the specified mobility operation.

In the method for configuring reference configuration information according to the embodiments of the present application, a first message is sent, where the first message carries reference configuration information; the reference configuration information is used for a candidate configuration of a specified mobility operation; a first message is sent, where the first message carries candidate configuration information of the specified mobility operation, and the candidate configuration of the specified mobility operation is conditionally presented in the first message, thereby implementing configuration of reference configuration information for the candidate configuration of at least one specified mobility operation, and further enabling the terminal to generate complete candidate configuration information based on the stored candidate configuration information or the candidate configuration information carried in the first message, and the reference configuration information, for mobility operation processing; improving the configuration efficiency of the reference configuration information and improving the efficiency of mobility operations.

It should be noted that the above possible implementations may be executed alone or in combination, which is not limited in the embodiments of the present application.

The following examples are provided for illustration.

First inventive concept: A method for independently configuring reference configuration (reference configuration information) for different types of mobility operations.

Here, one reference configuration is configured for selective activation of cell groups; one reference configuration is configured for LTM; the reference configuration information for selective activation of cell groups / LTM can only be configured when the network device configures selective activation of cell groups / LTM.

Inventive point 1: A terminal receives reference configuration information sent by the network side (network device), where the reference configuration information is reference configuration information used for a candidate configuration of a specific mobility operation, and the specific mobility operation includes, but is not limited to, one of LTM and selective activation of cell groups.

Inventive point 2: The field corresponding to the reference configuration information can be configured by a parameter of SetupRelease type.

Inventive point 2.1: Based on this, if the field corresponding to the reference configuration information is configured, then:
if the corresponding field is set to setup, a configuration or reconfiguration process of the reference configuration is performed; if the corresponding field is set to Release, the reference configuration stored in the UE is released or deleted.

Exemplarily,
xxx-ReferenceConfiguration-r18 SetupRelease { XXX-ReferenceConfiguration-r18 }

Exemplarily, xxx and XXX can be used to indicate descriptions related to the specific mobility operation.

Inventive point 3: For the field corresponding to the reference configuration information, this field is used to configure a field stored by the terminal (terminal), i.e., it is not one-time; when a message where this field is absent is received, the terminal maintains the current value. That is, this field corresponds to Need M.

Exemplarily,
xxx-referenceConfig-r18 OCTET STRING (CONTAINING RRCReconfiguration) OPTIONAL -- Need M

Exemplarily, xxx and XXX can be used to indicate descriptions related to the specific mobility operation.

Inventive point 4: If the corresponding reference configuration information must exist for the mobility operation, then, if the corresponding reference configuration information does not currently exist or is not stored on the terminal side (terminal), the network side must include this reference configuration information when configuring the corresponding mobility operation. If it exists, this reference configuration information can be included selectively.

Inventive point 4.1: Exemplarily, the above content can be implemented by making the field corresponding to the reference configuration information also conditionally present, i.e., whether the field is present or whether it is optional or mandatory is related to the description of the conditional presence. That is, when the corresponding reference configuration information is not stored on the terminal side, the field corresponding to the reference configuration information is mandatorily present; otherwise, this field is optionally configurable.

Exemplarily,
xxx-ReferenceConfiguration-r18 OCTET STRING (CONTAINING RRCReconfiguration) OPTIONAL -- Cond XXXReference

Exemplarily, xxx and XXX can be used to indicate descriptions related to the specific mobility operation.

Inventive point 5: The field corresponding to the reference configuration information can be included in an IE (Information Element) used only for configuring the mobility operation.

Exemplarily, if the mobility operation is LTM:
LTM-CandidateConfig-r18 ::= SEQUENCE {
ltm-ReferenceConfiguration-r18 SetupRelease { LTM-ReferenceConfiguration-r18 } OPTIONAL, -- Need M
Other configuration information for LTM
...
}
LTM-ReferenceConfiguration-r18 ::= SEQUENCE {
referenceConfig-r18 OCTET STRING (CONTAINING RRCReconfiguration)
}

Exemplarily, if the mobility operation is selective activation of cell groups:
Selectiveactivation-CandidateConfig-r18 ::= SEQUENCE {
selectiveActivation-ReferenceConfiguration-r18 SetupRelease { SelectiveActivation-ReferenceConfiguration-r18 } OPTIONAL, -- Need M
Other configuration information for selective activation of cell groups
...
}
SelectiveActivation-ReferenceConfiguration-r18 ::= SEQUENCE {
referenceConfig-r18 OCTET STRING (CONTAINING RRCReconfiguration)
}

Inventive point 6: The reference configuration information can be included in an IE used for configuring the mobility operation and other mobility operations. For example, for selective activation of cell groups, configuring selective activation of cell groups will 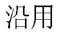 (continue to use) the ConditionalReconfiguration IE. That is, selective activation of cell groups and CHO/CPC/CPA will use the same IE for configuration.

In this case, since other mobility operations (e.g., CHO, CPA, CPC) do not need a reference configuration, this field is optionally presented (or must be configured) only if the terminal is configured with the corresponding mobility operation (e.g., selective activation of cell groups, or LTM); otherwise, the field is absent.

Inventive point 6.1: If the terminal is configured with at least one candidate SpCell corresponding to selective activation of cell groups, the field corresponding to the reference configuration for configuring selective activation of cell groups is optionally present; otherwise, the field is absent.

Inventive point 6.2: Since selective activation of cell groups can also be distinguished from the configuration information of CHO, CPA, CPC by a specific indication information (indication information 1), the presence condition for this configuration can be: if the UE is configured with at least one candidate SpCell associated with indication information 1, the field corresponding to the reference configuration is optionally present; otherwise, the field is absent.

Exemplarily,
-- ASN1START
-- TAG-CONDITIONALRECONFIGURATION-START
ConditionalReconfiguration-r16 ::= SEQUENCE {
attemptCondReconfig-r16 ENUMERATED {true} OPTIONAL, -- Cond CHO
condReconfigToRemoveList-r16 CondReconfigToRemoveList-r16 OPTIONAL, -- Need N
condReconfigToAddModList-r16 CondReconfigToAddModList-r16 OPTIONAL, -- Need N
...,
[[
xxx-ReferenceConfiguration-r18 OCTET STRING (CONTAINING RRCReconfiguration) OPTIONAL -- Cond SA
]]
}
CondReconfigToRemoveList-r16 ::= SEQUENCE (SIZE (1..maxNrofCondCells-r16)) OF CondReconfigId-r16
-- TAG-CONDITIONALRECONFIGURATION-STOP
-- ASN1STOP

Exemplarily, xxx and XXX can be used to indicate descriptions related to the specific mobility operation.

Second inventive concept: A method for configuring one reference configuration for different types of mobility operations.

Here, the reference configuration for LTM and selective activation of cell groups corresponds to the same field or IE; this field or IE is associated with an indication information (or this IE contains an indication information), where the indication information indicates the mobility operation for which the reference configuration is used (e.g., LTM or selective activation of cell groups); this field or IE can only be configured when the network configures a mobility operation that requires this specific reference configuration.

Inventive point 1: Receive reference configuration information sent by the network side, where the reference configuration information is reference configuration information used for a candidate configuration of a specific mobility operation, and the specific mobility operation includes, but is not limited to, one or more of LTM and selective activation of cell groups.

Inventive point 2: The reference configuration information may include or be associated with one or more pieces of indication information, where the indication information is used to indicate one or more mobility operations for which the reference configuration information is used, as the reference configuration corresponding to the candidate target configuration of these mobility operations.

Inventive point 3: The reference configuration information may include or be associated with one or more pieces of indication information, where the indication information is used to indicate a configuration identifier of the candidate configuration for which the reference configuration information is used.

Inventive point 4: The reference configuration information may also be multiple, each piece of reference configuration information is associated with at least one mobility operation, and one mobility operation can only be associated with one piece of reference configuration information.

Inventive point 5: The reference configuration information may also be multiple, each piece of reference configuration information is associated with at least one configuration identifier of a candidate configuration, and one configuration identifier of a candidate configuration can only be associated with one piece of reference configuration information.

Inventive point 6: For the field corresponding to the candidate configuration of LTM, if the corresponding configuration ID is used for configuration addition, this field is mandatory; otherwise, this field is optional.

Inventive point 7: The field corresponding to the candidate configuration for the specific mobility operation is conditionally present. That is, whether the field is present or whether it is optional or mandatory is related to the description of the conditional presence. That is, when the corresponding reference configuration information is not stored on the terminal side, or when the reference configuration information is not configured, the field corresponding to the candidate configuration is optionally present; otherwise, this field is not present.

In the embodiments provided above in the present application, the methods provided by the embodiments of the present application have been introduced from the perspectives of the network device and the terminal, respectively. In order to implement the various functions in the methods provided by the embodiments of the present application, the network device and the terminal may include hardware structures, software modules, and implement the various functions in the form of hardware structures, software modules, or hardware structures plus software modules. A certain function among the above functions may be executed by means of a hardware structure, a software module, or a hardware structure plus a software module.

Please refer to FIG. 11, which is a schematic structural diagram of a communication apparatus 110 provided by an embodiment of the present application. The apparatus is applied to a terminal, and the apparatus includes: a transceiver unit 1101, configured to receive a first message, where the first message carries reference configuration information; and the reference configuration information is used for a candidate configuration of a specified mobility operation.

In one implementation, the first message further includes at least one of: a candidate configuration used to configure the specified mobility operation; or a candidate configuration used to configure other mobility operations, where the other mobility operations include at least one of: conditional handover (CHO), conditional primary secondary cell addition (CPA), conditional primary secondary cell change (CPC).

In one implementation, the specified mobility operation is one or more of the following: Layer 1/Layer 2 triggered mobility (LTM), selective activation of cell groups, or other mobility operations, other than the LTM and the selective activation of cell groups, that are pre-configured with a candidate configuration.

In one implementation, the reference configuration information is configured with a first parameter of a setup/release type.

In one implementation, the first message carries the first parameter; the apparatus further includes: a processing unit 1102, configured to, in response to the first parameter being set to a first state, perform a configuration process or a reconfiguration process on the reference configuration information; or, in response to the first parameter being set to a second state, perform a release process or a deletion process on the stored reference configuration information.

In one implementation, the processing unit 1102 is further configured to store the reference configuration information used for the candidate configuration of the specified mobility operation.

In one implementation, the processing unit 1102 is further configured to, in response to receiving a second message not carrying reference configuration information, retain the stored reference configuration information; and/or, in response to receiving a third message carrying new reference configuration information, update the stored reference configuration information according to the new reference configuration information.

In one implementation, a presence state of the reference configuration information for the candidate configuration of the specified mobility operation in the first message includes any one of: conditionally present, optionally present, or mandatorily present.

In one implementation, in response to the reference configuration information for the candidate configuration of the specified mobility operation being conditionally presented in the first message, a presence condition of the reference configuration information is one or more of: the reference configuration information is not stored in the terminal, or the reference configuration information is not configured.

In one implementation, when the reference configuration information is not stored in the terminal, or the reference configuration information is not configured, the reference configuration information is mandatorily presented in the first message; and/or, when the reference configuration information is stored in the terminal, or the reference configuration information is configured in the terminal, the reference configuration information is optionally presented in the first message.

In one implementation, in response to the reference configuration information for the candidate configuration of the specified mobility operation being conditionally presented in the first message, a presence condition of the reference configuration information is that the terminal is configured with the specified mobility operation.

In one implementation, when the terminal is configured with the specified mobility operation, the reference configuration information is optionally presented in the first message; and/or, when the terminal is not configured with the specified mobility operation, the reference configuration information is not present in the first message.

In one implementation, in response to the reference configuration information for the candidate configuration of the specified mobility operation being conditionally presented in the first message, a presence condition of the reference configuration information is one or more of: candidate configuration information corresponding to a mobility operation for which the reference configuration information is used is already stored in the terminal, or candidate configuration information corresponding to a mobility operation for which the reference configuration information is used is configured.

In one implementation, when the presence condition is met, the reference configuration information is optionally presented in the first message; and/or, when the presence condition is not met, the reference configuration information is not present in the first message.

In one implementation, the terminal being configured with the specified mobility operation includes: the terminal being configured with a candidate configuration for the specified mobility operation; or, the terminal being configured with a candidate configuration associated with first indication information, where the first indication information is used for the specified mobility operation.

In one implementation, the reference configuration information is carried in an information element used for the specified mobility operation in the first message.

In one implementation, the reference configuration information is carried in any one of the following information elements in the first message: an information element used for the specified mobility operation, an information element used for other mobility operations; where the other mobility operations include at least one of: CHO, CPA, CPC.

In one implementation, the reference configuration information includes or is associated with at least one piece of second indication information, where the second indication information is used to indicate the specified mobility operation for which the reference configuration information is used.

In one implementation, the second indication information includes: an identifier of at least one candidate configuration of the specified mobility operation for which the reference configuration information is used.

In one implementation, a quantity of the reference configuration information is at least one, each piece of reference configuration information is associated with at least one type of specified mobility operation; each type of specified mobility operation is associated with one piece of reference configuration information.

In one implementation, each piece of reference configuration information is associated with an identifier of at least one candidate configuration of the specified mobility operation; each identifier of the candidate configuration is associated with one piece of reference configuration information.

In one implementation, in response to the candidate configuration for the specified mobility operation being conditionally present, a presence condition of candidate configuration information corresponding to the specified mobility operation is one or more of: the reference configuration information is already stored in the terminal, or the reference configuration information is configured.

In one implementation, when the presence condition is met, the candidate configuration information is optionally presented in the first message; and/or, when the presence condition is not met, the candidate configuration information is not present in the first message.

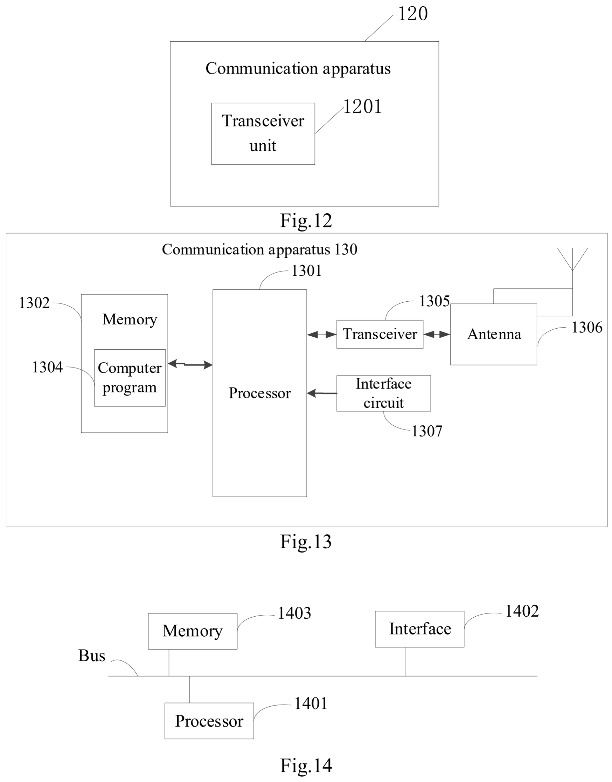

Please refer to FIG. 12, which is a schematic structural diagram of another communication apparatus 120 provided by an embodiment of the present application. The apparatus is applied to a network device, and the apparatus includes: a transceiver unit 1201, configured to send a first message, where the first message carries reference configuration information; and the reference configuration information is used for a candidate configuration of a specified mobility operation.

In one implementation, the first message further includes at least one of: a candidate configuration used to configure the specified mobility operation; or a candidate configuration used to configure other mobility operations, where the other mobility operations include at least one of: conditional handover (CHO), conditional primary secondary cell addition (CPA), conditional primary secondary cell change (CPC).

In one implementation, the specified mobility operation is one or more of the following: Layer 1/Layer 2 triggered mobility (LTM), selective activation of cell groups, or other mobility operations, other than the LTM and the selective activation of cell groups, that are pre-configured with a candidate configuration.

In one implementation, the reference configuration information is configured with a first parameter of a setup/release type.

In one implementation, the first message carries the first parameter; where when the first parameter is set to a first state, it is used to instruct the terminal to perform a configuration process or a reconfiguration process on the reference configuration information; when the first parameter is set to a second state, it is used to instruct the terminal to perform a release process or a deletion process on the stored reference configuration information.

In one implementation, a presence state of the reference configuration information for the candidate configuration of the specified mobility operation in the first message includes any one of: conditionally present, optionally present, or mandatorily present.

In one implementation, the presence state of the reference configuration information for the candidate configuration of the specified mobility operation in the first message is conditionally present, and a presence condition of the reference configuration information is one or more of: the reference configuration information is not stored in the terminal, or the reference configuration information is not configured.

In one implementation, when the reference configuration information is not stored in the terminal, or the reference configuration information is not configured, the reference configuration information is mandatorily presented in the first message; and/or, when the reference configuration information is stored in the terminal, or the reference configuration information is configured in the terminal, the reference configuration information is optionally presented in the first message.

In one implementation, the reference configuration information for the candidate configuration of the specified mobility operation is conditionally presented in the first message, and a presence condition of the reference configuration information is that the terminal is configured with the specified mobility operation.

In one implementation, when the terminal is configured with the specified mobility operation, the reference configuration information is optionally presented in the first message; and/or, when the terminal is not configured with the specified mobility operation, the reference configuration information is not present in the first message.

In one implementation, the reference configuration information for the candidate configuration of the specified mobility operation is conditionally presented in the first message, and a presence condition of the reference configuration information is one or more of: candidate configuration information corresponding to a mobility operation for which the reference configuration information is used is already stored in the terminal, or candidate configuration information corresponding to a mobility operation for which the reference configuration information is used is configured.

In one implementation, when the presence condition is met, the reference configuration information is optionally presented in the first message; and/or, when the presence condition is not met, the reference configuration information is not present in the first message.

In one implementation, the terminal being configured with the specified mobility operation includes: the terminal being configured with a candidate configuration for the specified mobility operation; or, the terminal being configured with a candidate configuration associated with first indication information, where the first indication information is used for the specified mobility operation.

In one implementation, the reference configuration information is carried in an information element used for the specified mobility operation in the first message.

In one implementation, the reference configuration information is carried in any one of the following information elements in the first message: an information element used for the specified mobility operation, an information element used for other mobility operations; where the other mobility operations include at least one of: CHO, CPA, CPC.

In one implementation, the reference configuration information includes or is associated with at least one piece of second indication information, where the second indication information is used to indicate the specified mobility operation for which the reference configuration information is used.

In one implementation, the second indication information includes: an identifier of at least one candidate configuration of the specified mobility operation for which the reference configuration information is used.

In one implementation, a quantity of the reference configuration information is at least one, each piece of reference configuration information is associated with at least one type of specified mobility operation; each type of specified mobility operation is associated with one piece of reference configuration information.

In one implementation, each piece of reference configuration information is associated with an identifier of at least one candidate configuration of the specified mobility operation; each identifier of the candidate configuration is associated with one piece of reference configuration information.

In one implementation, the candidate configuration for the specified mobility operation is conditionally present, and a presence condition of candidate configuration information corresponding to the specified mobility operation is one or more of: the reference configuration information is already stored in the terminal, or the reference configuration information is configured.

In one implementation, when the presence condition is met, the candidate configuration information is optionally presented in the first message; and/or, when the presence condition is not met, the candidate configuration information is not present in the first message.

Please refer to FIG. 13. FIG. 13 is a schematic structural diagram of another communication apparatus 130 provided by an embodiment of the present application. The communication apparatus 130 may be a network device, a terminal, a chip, a chip system, or a processor that supports the network device to implement the above method, or a chip, a chip system, or a processor that supports the terminal to implement the above method. The apparatus may be used to implement the method described in the above method embodiments. For details, refer to the description in the above method embodiments.

The communication apparatus 130 may include one or more processors 1301. The processor 1301 may be a general-purpose processor or a special-purpose processor, etc. For example, it may be a baseband processor or a central processing unit. The baseband processor may be used to process communication protocols and communication data, and the central processing unit may be used to control the communication apparatus (e.g., a base station, a baseband chip, a terminal, a terminal chip, a DU, or a CU, etc.), execute computer programs, and process data of the computer programs.

Optionally, the communication apparatus 130 may further include one or more memories 1302, on which a computer program 1304 may be stored. The processor 1301 executes the computer program 1304 to cause the communication apparatus 130 to perform the method described in the above method embodiments. Optionally, data may also be stored in the memory 1302. The communication apparatus 130 and the memory 1302 may be provided separately or integrated together.

Optionally, the communication apparatus 130 may further include a transceiver 1305 and an antenna 1306. The transceiver 1305 may be referred to as a transceiver unit, a transceiver, or a transceiver circuit, etc., and is used to implement transceiver functions. The transceiver 1305 may include a receiver and a transmitter. The receiver may be referred to as a receiver or a receiving circuit, etc., and is used to implement receiving functions; the transmitter may be referred to as a transmitter or a transmitting circuit, etc., and is used to implement transmitting functions.

Optionally, the communication apparatus 130 may further include one or more interface circuits 1307. The interface circuit 1307 is configured to receive code instructions and transmit them to the processor 1301. The processor 1301 runs the code instructions to cause the communication apparatus 130 to perform the method described in the above method embodiments.

When the communication apparatus 130 is a terminal (such as the terminal in the foregoing method embodiments): the processor 1301 is configured to perform step S302 and step S303 in FIG. 3; step S402, step S403, and step S404 in FIG. 4. The transceiver 1305 is configured to perform step S201 in FIG. 2; step S301 in FIG. 3; step S401 in FIG. 4; step S501 in FIG. 5; step S601 and step S602 in FIG. 6.

When the communication apparatus 130 is a network device: the transceiver 1305 is configured to perform step S701 in FIG. 7; step S801 in FIG. 8; step S901 in FIG. 9; step S1001 and step S1002 in FIG. 10.

In one implementation, the processor 1301 may include a transceiver for implementing receiving and transmitting functions. For example, the transceiver may be a transceiver circuit, an interface, or an interface circuit. The transceiver circuit, interface, or interface circuit for implementing receiving and transmitting functions may be separate or integrated together. The aforementioned transceiver circuit, interface, or interface circuit may be used for reading/writing code/data, or may be used for transmitting or transferring signals.

In one implementation, the processor 1301 may store a computer program 1303. The computer program 1303 runs on the processor 1301 and may cause the communication apparatus 130 to perform the method described in the above method embodiments. The computer program 1303 may be solidified in the processor 1301. In this case, the processor 1301 may be implemented by hardware.

In one implementation, the communication apparatus 130 may include a circuit, and the circuit may implement the functions of sending, receiving, or communication in the foregoing method embodiments. The processor and transceiver described in present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and transceiver may also be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon germanium (SiGe), gallium arsenide (GaAs), etc.

The communication device in the above embodiment descriptions may be a network device or a terminal (such as the first terminal in the foregoing method embodiments), but the scope of the communication device described in present disclosure is not limited thereto, and the structure of the communication device is not limited by FIG. 13. The communication device may be an independent device or may be a part of a larger device. For example, the communication device may be:
(1) an independent integrated circuit (IC), or chip, or chip system or subsystem;
(2) a set of one or more ICs, optionally, the set of ICs may also include storage components for storing data and computer programs;
(3) an ASIC, such as a modem (Modem);
(4) a module that can be embedded in other devices;
(5) a receiver, terminal, smart terminal, cellular phone, wireless device, handset, mobile unit, vehicle-mounted device, network device, cloud device, artificial intelligence device, etc.;
(6) others, etc.

For the case where the communication device may be a chip or a chip system, refer to the schematic structural diagram of the chip shown in FIG. 14. The chip shown in FIG. 14 includes a processor 1401 and an interface 1402. The number of processors 1401 may be one or more, and the number of interfaces 1402 may be multiple.

For the case where the chip is used to implement the functions of the terminal (such as the terminal in the foregoing method embodiments) in the embodiments of the present application:

The interface 1402 is configured to receive a first message, where the first message carries reference configuration information; and the reference configuration information is used for a candidate configuration of a specified mobility operation.

Optionally, the first message further includes at least one of: a candidate configuration used to configure the specified mobility operation; or a candidate configuration used to configure other mobility operations, where the other mobility operations include at least one of: conditional handover (CHO), conditional primary secondary cell addition (CPA), conditional primary secondary cell change (CPC).

Optionally, the specified mobility operation is one or more of the following: Layer 1/Layer 2 triggered mobility (LTM), selective activation of cell groups, or other mobility operations, other than the LTM and the selective activation of cell groups, that are pre-configured with a candidate configuration.

Optionally, the reference configuration information is configured with a first parameter of a setup/release type.

Optionally, a presence state of the reference configuration information for the candidate configuration of the specified mobility operation in the first message includes any one of: conditionally present, optionally present, or mandatorily present.

Optionally, in response to the reference configuration information for the candidate configuration of the specified mobility operation being conditionally presented in the first message, a presence condition of the reference configuration information is one or more of: the reference configuration information is not stored in the terminal, or the reference configuration information is not configured.

Optionally, when the reference configuration information is not stored in the terminal, or the reference configuration information is not configured, the reference configuration information is mandatorily presented in the first message; and/or, when the reference configuration information is stored in the terminal, or the reference configuration information is configured in the terminal, the reference configuration information is optionally presented in the first message.

Optionally, in response to the reference configuration information for the candidate configuration of the specified mobility operation being conditionally presented in the first message, a presence condition of the reference configuration information is that the terminal is configured with the specified mobility operation.

Optionally, when the terminal is configured with the specified mobility operation, the reference configuration information is optionally presented in the first message; and/or, when the terminal is not configured with the specified mobility operation, the reference configuration information is not presented in the first message.

Optionally, in response to the reference configuration information for the candidate configuration of the specified mobility operation being conditionally presented in the first message, a presence condition of the reference configuration information is one or more of: candidate configuration information corresponding to a mobility operation for which the reference configuration information is used being already stored in the terminal, or candidate configuration information corresponding to a mobility operation for which the reference configuration information is used being configured.

Optionally, when the presence condition is met, the reference configuration information is optionally presented in the first message; and/or, when the presence condition is not met, the reference configuration information is not presented in the first message.

Optionally, the terminal being configured with the specified mobility operation includes: the terminal being configured with the candidate configuration for the specified mobility operation; or, the terminal being configured with a candidate configuration associated with first indication information, where the first indication information is used for the specified mobility operation.

Optionally, the reference configuration information is carried in an information element used for the specified mobility operation in the first message.

Optionally, the reference configuration information is carried in any one of the following information elements in the first message: an information element used for the specified mobility operation, an information element used for another mobility operation; where the another mobility operation includes at least one of: CHO, CPA, CPC.

Optionally, the reference configuration information includes or is associated with at least one piece of second indication information, where the second indication information is used to indicate the specified mobility operation for which the reference configuration information is used.

Optionally, the second indication information includes: an identifier of at least one candidate configuration of the specified mobility operation for which the reference configuration information is used.

Optionally, a quantity of the reference configuration information is at least one, and each piece of the reference configuration information is associated with at least one type of specified mobility operation; each type of specified mobility operation is associated with one piece of reference configuration information.

Optionally, each piece of the reference configuration information is associated with an identifier of at least one candidate configuration of the specified mobility operation; each identifier of the candidate configuration is associated with one piece of the reference configuration information.

Optionally, in response to the candidate configuration for the specified mobility operation being conditionally presented, a presence condition of candidate configuration information corresponding to the specified mobility operation is one or more of: the reference configuration information being already stored in the terminal, or the reference configuration information being configured.

Optionally, when the presence condition is met, the candidate configuration information is optionally presented in the first message; and/or, when the presence condition is not met, the candidate configuration information is not presented in the first message.

For the case where a chip is used to implement the function of the network device in the embodiments of the present application:
an interface 1402, configured to send a first message, where the first message carries reference configuration information; where the reference configuration information is used for a candidate configuration of a specified mobility operation.

Optionally, the first message further includes at least one of: a candidate configuration used to configure the specified mobility operation; or a candidate configuration used to configure another mobility operation, where the another mobility operation includes at least one of: a conditional handover (CHO), a conditional primary secondary cell addition (CPA), a conditional primary secondary cell change (CPC).

Optionally, the specified mobility operation includes one or more of the following types: a Layer 1/Layer 2-triggered mobility (LTM); a selective activation of cell groups; or a mobility operation, other than the LTM and the selective activation of cell groups, pre-configured with the candidate configuration.

Optionally, the reference configuration information is configured with a first parameter of a setup/release type.

Optionally, the first message carries the first parameter; when the first parameter is set to a first state, it is used to instruct the terminal to perform a configuration processing or a reconfiguration processing on the reference configuration information; when the first parameter is set to a second state, it is used to instruct the terminal to perform a release processing or a deletion processing on the stored reference configuration information.

Optionally, a presence state of the reference configuration information for the candidate configuration of the specified mobility operation in the first message includes any one of: conditionally presented, optionally presented, or mandatorily presented.

Optionally, the presence state of the reference configuration information for the candidate configuration of the specified mobility operation in the first message is conditionally presented, and a presence condition of the reference configuration information is one or more of: the reference configuration information being not stored in the terminal, or the reference configuration information being not configured.

Optionally, when the reference configuration information is not stored in the terminal, or the reference configuration information is not configured, the reference configuration information is mandatorily presented in the first message; and/or, when the reference configuration information is stored in the terminal, or the reference configuration information is configured in the terminal, the reference configuration information is optionally presented in the first message.

Optionally, the reference configuration information for the candidate configuration of the specified mobility operation is conditionally presented in the first message, and a presence condition of the reference configuration information is that the terminal is configured with the specified mobility operation.

Optionally, when the terminal is configured with the specified mobility operation, the reference configuration information is optionally presented in the first message; and/or, when the terminal is not configured with the specified mobility operation, the reference configuration information is not presented in the first message.

Optionally, the reference configuration information for the candidate configuration of the specified mobility operation is conditionally presented in the first message, and a presence condition of the reference configuration information is one or more of: candidate configuration information corresponding to a mobility operation for which the reference configuration information is used being already stored in the terminal, or candidate configuration information corresponding to a mobility operation for which the reference configuration information is used being configured.

Optionally, when the presence condition is met, the reference configuration information is optionally presented in the first message; and/or, when the presence condition is not met, the reference configuration information is not presented in the first message.

Optionally, the terminal being configured with the specified mobility operation includes: the terminal being configured with the candidate configuration for the specified mobility operation; or, the terminal being configured with a candidate configuration associated with first indication information, where the first indication information is used for the specified mobility operation.

Optionally, the reference configuration information is carried in an information element used for the specified mobility operation in the first message.

Optionally, the reference configuration information is carried in any one of the following information elements in the first message: an information element used for the specified mobility operation, an information element used for another mobility operation; where the another mobility operation includes at least one of: CHO, CPA, CPC.

Optionally, the reference configuration information includes or is associated with at least one piece of second indication information, where the second indication information is used to indicate the specified mobility operation for which the reference configuration information is used.

Optionally, the second indication information includes: an identifier of at least one candidate configuration of the specified mobility operation for which the reference configuration information is used.

Optionally, a quantity of the reference configuration information is at least one, and each piece of the reference configuration information is associated with at least one type of specified mobility operation; each type of specified mobility operation is associated with one piece of reference configuration information.

Optionally, each piece of the reference configuration information is associated with an identifier of at least one candidate configuration of the specified mobility operation; each identifier of the candidate configuration is associated with one piece of the reference configuration information.

Optionally, the candidate configuration for the specified mobility operation is conditionally presented, and a presence condition of candidate configuration information corresponding to the specified mobility operation is one or more of: the reference configuration information being already stored in the terminal, or the reference configuration information being configured.

Optionally, when the presence condition is met, the candidate configuration information is optionally presented in the first message; and/or, when the presence condition is not met, the candidate configuration information is not presented in the first message.

Optionally, the chip further includes a memory 1403, where the memory 1403 is configured to store necessary computer programs and data.

Those skilled in the art can also understand that the various illustrative logical blocks and steps listed in the embodiments of the present application can be implemented by electronic hardware, computer software, or a combination of both. Whether such functions are implemented by hardware or software depends on the specific application and design constraints of the overall system. Those skilled in the art can use various methods to implement the described functions for each specific application, but such implementation should not be interpreted as going beyond the scope of protection of the embodiments of the present application.

The embodiments of the present application also provide a communication system, which includes the communication device as the terminal (such as the terminal in the foregoing method embodiments) in the embodiment of FIG. 11 and the communication device as the network device in the embodiment of FIG. 12.

The present application also provides a readable storage medium having instructions stored thereon, which, when executed by a computer, implement the functions of any of the foregoing method embodiments.

The present application also provides a computer program product, which, when executed by a computer, implements the functions of any of the foregoing method embodiments.

In the foregoing embodiments, the implementation may be entirely or partially through software, hardware, firmware, or any combination thereof. When software is used for implementation, it may be implemented entirely or partially in the form of a computer program product. The computer program product includes one or more computer programs. When the computer program is loaded and executed on a computer, the processes or functions described in the embodiments of the present application are generated entirely or partially. The computer may be a general-purpose computer, a special-purpose computer, a computer network, or other programmable apparatus. The computer program may be stored in a computer-readable storage medium or transmitted from one computer-readable storage medium to another computer-readable storage medium. For example, the computer program may be transmitted from a website, computer, server, or data center to another website, computer, server, or data center by wired means (e.g., coaxial cable, optical fiber, digital subscriber line (DSL)) or wireless means (e.g., infrared, wireless, microwave, etc.). The computer-readable storage medium may be any available medium that can be accessed by a computer or a data storage device such as a server or data center that integrates one or more available media. The available medium may be a magnetic medium (e.g., floppy disk, hard disk, magnetic tape), an optical medium (e.g., DVD), or a semiconductor medium (e.g., solid state disk (SSD)), etc.

Those of ordinary skill in the art can understand that the various numerical designations such as first and second involved in present disclosure are only for the convenience of description and distinction, and are not used to limit the scope of the embodiments of the present application, nor do they indicate a sequence.

"At least one" in present disclosure can also be described as "one or more", and "a plurality of" can be two, three, four, or more, which is not limited in present disclosure. In the embodiments of present disclosure, for a technical feature, the technical features therein are distinguished by "first", "second", "third", "A", "B", "C", "D", etc. There is no sequential order or size order among the technical features described by "first", "second", "third", "A", "B", "C", and "D".

The corresponding relationships shown in the tables in present disclosure may be configured or predefined. The values of the information in each table are merely examples and may be configured as other values, which is not limited in present disclosure. When configuring the correspondence between configuration information and various parameters, it is not necessarily required to configure all the correspondences shown in the tables. For example, in the tables in present disclosure, the correspondences shown in some rows may not be configured. Alternatively, appropriate adjustments, such as splitting, merging, etc., may be made based on the above tables. The names of the parameters shown in the titles of the above tables may also be other names understandable by the communication device, and the values or representations of the parameters may also be other values or representations understandable by the communication device. When implementing the above tables, other data structures may also be used, such as arrays, queues, containers, stacks, linear lists, pointers, linked lists, trees, graphs, structures, classes, heaps, hash tables, etc.

"Predefined" in present disclosure can be understood as defined, pre-defined, stored, prestored, pre-negotiated, pre-configured, solidified, or pre-burned.

Those of ordinary skill in the art can realize that the units and algorithm steps of the examples described in combination with the embodiments disclosed in this document can be implemented by electronic hardware, or a combination of computer software and electronic hardware. Whether these functions are performed by hardware or software depends on the specific application and design constraints of the technical solution. Professionals can use different methods for each specific application to implement the described functions, but such implementation should not be considered beyond the scope of present disclosure.

Those skilled in the art can clearly understand that for the convenience and conciseness of description, the specific working processes of the systems, devices, and units described above can refer to the corresponding processes in the foregoing method embodiments, and will not be repeated here.

The above are only specific implementations of present disclosure, but the scope of protection of present disclosure is not limited thereto. Any person skilled in the art can easily think of changes or substitutions within the technical scope disclosed in present disclosure, which should be covered within the scope of protection of present disclosure. Therefore, the scope of protection of present disclosure shall be subject to the scope of protection of the claims.

## Claims

1. A method for configuring reference configuration information, performed by a terminal, comprising:
receiving a first message, wherein the first message carries reference configuration information;
wherein the reference configuration information is used for a candidate configuration of a specified mobility operation.

2. The method according to claim 1, wherein the first message further comprises at least one of:
a candidate configuration used to configure the specified mobility operation; or
a candidate configuration used to configure a mobility operation other than the specified mobility operation, wherein the mobility operation other than the specified mobility operation comprises at least one of: a conditional handover (CHO), a conditional primary secondary cell addition (CPA), a conditional primary secondary cell change (CPC).

3. The method according to claim 1, wherein the specified mobility operation comprises one or more of the following types:
a Layer 1/Layer 2-triggered mobility (LTM);
a selective activation of cell groups; or
a mobility operation, other than an LTM and a selective activation of cell groups, pre-configured with the candidate configuration.

4. The method according to any one of claims 1 to 3, wherein the reference configuration information is configured with a first parameter of a setup/release type.

5. The method according to claim 4, wherein the first message carries the first parameter, and the method further comprises:
in response to the first parameter being set to a first state, configuring or a reconfiguring the reference configuration information;
or
in response to the first parameter being set to a second state, releasing or deleting the reference configuration information stored.

6. The method according to claim 1, further comprising:
storing the reference configuration information used for the candidate configuration of the specified mobility operation.

7. The method according to claim 6, further comprising:
in response to receiving a second message not carrying reference configuration information, retaining the reference configuration information stored;
and/or
in response to receiving a third message carrying new reference configuration information, updating, according to the new reference configuration information, the reference configuration information stored.

8. The method according to claim 1, wherein a presence state of the reference configuration information for the candidate configuration of the specified mobility operation in the first message comprises any one of: being conditionally presented, being optionally presented or being mandatorily presented.

9. The method according to claim 1 or 8, wherein in response to the reference configuration information for the candidate configuration of the specified mobility operation being conditionally presented in the first message, a presence condition of the reference configuration information is one or more of: the reference configuration information being not stored in the terminal, or the reference configuration information being not configured.

10. The method according to claim 9, wherein
in a case where the reference configuration information is not stored in the terminal or the reference configuration information is not configured, the reference configuration information is mandatorily presented in the first message;
and/or
in a case where the reference configuration information is stored in the terminal or the reference configuration information is configured in the terminal, the reference configuration information is optionally presented in the first message.

11. The method according to claim 1 or 8, wherein in response to the reference configuration information for the candidate configuration of the specified mobility operation being conditionally presented in the first message, a presence condition of the reference configuration information is that the terminal is configured with the specified mobility operation.

12. The method according to claim 11, wherein
in a case where the terminal is configured with the specified mobility operation, the reference configuration information is optionally presented in the first message;
and/or
in a case where the terminal is not configured with the specified mobility operation, the reference configuration information is not presented in the first message.

13. The method according to claim 1 or 8, wherein in response to the reference configuration information for the candidate configuration of the specified mobility operation being conditionally presented in the first message, a presence condition of the reference configuration information is one or more of: candidate configuration information corresponding to a mobility operation for which the reference configuration information is used being already stored in the terminal, or candidate configuration information corresponding to a mobility operation for which the reference configuration information is used being configured.

14. The method according to claim 13, wherein
in a case when the presence condition is met, the reference configuration information is optionally presented in the first message;
and/or
in a case where the presence condition is not met, the reference configuration information is not presented in the first message.

15. The method according to claim 10, wherein the terminal being configured with the specified mobility operation comprises:
the terminal being configured with the candidate configuration of the specified mobility operation;
or
the terminal being configured with a candidate configuration associated with first indication information, wherein the first indication information is used for the specified mobility operation.

16. The method according to claim 1, wherein the reference configuration information is carried in an information element used for the specified mobility operation in the first message.

17. The method according to claim 1, wherein the reference configuration information is carried in any one of the following information elements in the first message: an information element used for the specified mobility operation, an information element used for a mobility operation other than the specified mobility operation;
wherein the mobility operation other than the specified mobility operation comprises at least one of: CHO, CPA, or CPC.

18. The method according to claim 3, wherein the reference configuration information comprises or is associated with at least one piece of second indication information, and the second indication information is used to indicate the specified mobility operation for which the reference configuration information is used.

19. The method according to claim 18, wherein the second indication information comprises: an identifier of at least one candidate configuration of the specified mobility operation for which the reference configuration information is used.

20. The method according to claim 3, wherein a quantity of pieces of the reference configuration information is at least one, and each piece of the reference configuration information is associated with at least one type of specified mobility operation;
each type of specified mobility operation is associated with one piece of reference configuration information.

21. The method according to claim 20, wherein each piece of the reference configuration information is associated with an identifier of at least one candidate configuration of the specified mobility operation;
each identifier of the candidate configuration is associated with one piece of the reference configuration information.

22. The method according to any one of claims 1 to 3, wherein in response to the candidate configuration of the specified mobility operation being conditionally presented, a presence condition of candidate configuration information corresponding to the specified mobility operation is one or more of: the reference configuration information being already stored in the terminal, or the reference configuration information being configured.

23. The method according to claim 22, wherein
in a case when the presence condition is met, the candidate configuration information is optionally presented in the first message;
and/or
in a case where the presence condition is not met, the candidate configuration information is not presented in the first message.

24. A method for configuring reference configuration information, performed by a network device, comprising:
sending a first message, wherein the first message carries reference configuration information;
wherein the reference configuration information is used for a candidate configuration of a specified mobility operation.

25. The method according to claim 24, wherein the first message further comprises at least one of:
a candidate configuration used to configure the specified mobility operation; or
a candidate configuration used to configure a mobility operation other than the specified mobility operation, wherein the mobility operation other than the specified mobility operation comprises at least one of: a conditional handover (CHO), a conditional primary secondary cell addition (CPA), a conditional primary secondary cell change (CPC).

26. The method according to claim 24, wherein the specified mobility operation comprises one or more of the following types:
a Layer 1/Layer 2-triggered mobility (LTM);
a selective activation of cell groups; or
a mobility operation, other than an LTM and a selective activation of cell groups, pre-configured with the candidate configuration.

27. The method according to any one of claims 24 to 26, wherein the reference configuration information is configured with a first parameter of a setup/release type.

28. The method according to claim 27, wherein the first message carries the first parameter;
the first parameter is set to a first state, and the first parameter is used to instruct the terminal to configure or a reconfigure the reference configuration information;
or
the first parameter is set to a second state, and the first parameter is used to instruct the terminal to release or delete the reference configuration information stored.

29. The method according to claim 24, wherein a presence state of the reference configuration information for the candidate configuration of the specified mobility operation in the first message comprises any one of: being conditionally presented, being optionally presented or being mandatorily presented.

30. The method according to claim 24 or 29, wherein the reference configuration information for the candidate configuration of the specified mobility operation is conditionally presented in the first message, and a presence condition of the reference configuration information is one or more of: the reference configuration information being not stored in the terminal, or the reference configuration information being not configured.

31. The method according to claim 30, wherein
in a case where the reference configuration information is not stored in the terminal or the reference configuration information is not configured, the reference configuration information is mandatorily presented in the first message;
and/or
in a case where the reference configuration information is stored in the terminal or the reference configuration information is configured in the terminal, the reference configuration information is optionally presented in the first message.

32. The method according to claim 24 or 29, wherein the reference configuration information for the candidate configuration of the specified mobility operation is conditionally presented in the first message, and a presence condition of the reference configuration information is that the terminal is configured with the specified mobility operation.

33. The method according to claim 32, wherein
in a case where the terminal is configured with the specified mobility operation, the reference configuration information is optionally presented in the first message;
and/or
in a case where the terminal is not configured with the specified mobility operation, the reference configuration information is not presented in the first message.

34. The method according to claim 24 or 29, wherein the reference configuration information for the candidate configuration of the specified mobility operation is conditionally presented in the first message, and a presence condition of the reference configuration information is one or more of: candidate configuration information corresponding to a mobility operation for which the reference configuration information is used being already stored in the terminal, or candidate configuration information corresponding to a mobility operation for which the reference configuration information is used being configured.

35. The method according to claim 34, wherein
in a case when the presence condition is met, the reference configuration information is optionally presented in the first message;
and/or
in a case where the presence condition is not met, the reference configuration information is not presented in the first message.

36. The method according to claim 32, wherein the terminal being configured with the specified mobility operation comprises:
the terminal being configured with the candidate configuration of the specified mobility operation;
or
the terminal being configured with a candidate configuration associated with first indication information, wherein the first indication information is used for the specified mobility operation.

37. The method according to claim 24, wherein the reference configuration information is carried in an information element used for the specified mobility operation in the first message.

38. The method according to claim 24, wherein the reference configuration information is carried in any one of the following information elements in the first message: an information element used for the specified mobility operation, an information element used for a mobility operation other than the specified mobility operation;
wherein the mobility operation other than the specified mobility operation comprises at least one of: CHO, CPA, or CPC.

39. The method according to claim 26, wherein the reference configuration information comprises or is associated with at least one piece of second indication information, and the second indication information is used to indicate the specified mobility operation for which the reference configuration information is used.

40. The method according to claim 39, wherein the second indication information comprises: an identifier of at least one candidate configuration of the specified mobility operation for which the reference configuration information is used.

41. The method according to claim 26, wherein a quantity of pieces of the reference configuration information is at least one, and each piece of the reference configuration information is associated with at least one type of specified mobility operation;
each type of specified mobility operation is associated with one piece of reference configuration information.

42. The method according to claim 41, wherein each piece of the reference configuration information is associated with an identifier of at least one candidate configuration of the specified mobility operation;
each identifier of the candidate configuration is associated with one piece of the reference configuration information.

43. The method according to any one of claims 24 to 26, wherein the candidate configuration of the specified mobility operation is conditionally presented, and a presence condition of candidate configuration information corresponding to the specified mobility operation is one or more of: the reference configuration information being already stored in the terminal, or the reference configuration information being configured.

44. The method according to claim 43, wherein
in a case when the presence condition is met, the candidate configuration information is optionally presented in the first message;
and/or
in a case where the presence condition is not met, the candidate configuration information is not presented in the first message.

45. A communication apparatus, performed by a terminal, comprising:
a transceiver unit, configured to receive a first message, wherein the first message carries reference configuration information;
wherein the reference configuration information is used for a candidate configuration of a specified mobility operation.

46. A communication apparatus, performed by a network device, comprising:
a transceiver unit, configured to send a first message, wherein the first message carries reference configuration information;
wherein the reference configuration information is used for a candidate configuration of a specified mobility operation.

47. A communication apparatus, comprising a processor and a memory, wherein a computer program is stored in the memory, and the processor executes the computer program stored in the memory to cause the communication apparatus to perform the method according to any one of claims 1 to 23.

48. A communication apparatus, comprising a processor and a memory, wherein a computer program is stored in the memory, and the processor executes the computer program stored in the memory to cause the apparatus to perform the method according to any one of claims 24 to 44.

49. A communication apparatus, comprising: a processor and an interface circuit;
wherein the interface circuit is configured to receive code instructions and transmit the code instructions to the processor; and
the processor is configured to run the code instructions to perform the method according to any one of claims 1 to 23.

50. A communication apparatus, comprising: a processor and an interface circuit;
wherein the interface circuit is configured to receive code instructions and transmit the code instructions to the processor;
the processor is configured to run the code instructions to perform the method according to any one of claims 24 to 44.

51. A computer-readable storage medium, having stored therein instructions that, where executed, cause the method according to any one of claims 1 to 23 to be implemented.

52. A computer-readable storage medium, having stored therein instructions that, where executed, cause the method according to any one of claims 24 to 44 to be implemented.
